(19) Europäisches Patentamt
European Patent Office
Office européen des brevets

(11) **EP 2 026 087 B1**

(12) **EUROPÄISCHE PATENTSCHRIFT**

(45) Veröffentlichungstag und Bekanntmachung des Hinweises auf die Patenterteilung:
**31.03.2010 Patentblatt 2010/13**

(51) Int Cl.:
*G01S 3/14* (2006.01)   *G01S 11/14* (2006.01)

(21) Anmeldenummer: **08011111.5**

(22) Anmeldetag: **19.06.2008**

(54) **Verfahren und Vorrichtung zum passiven Bestimmen von Zieldaten**

Method and device for passive determination of target data

Procédé et dispositif de détermination passive de données cibles

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.08.2007 DE 102007038559**

(43) Veröffentlichungstag der Anmeldung:
**18.02.2009 Patentblatt 2009/08**

(73) Patentinhaber: **ATLAS Elektronik GmbH**
**28309 Bremen (DE)**

(72) Erfinder: **Steimel, Ulrich, Dr.**
**28876 Oyten (DE)**

(74) Vertreter: **Wasiljeff, Johannes M.B.**
**Jabbusch Siekmann & Wasiljeff**
**Patentanwälte**
**Otto-Lilienthal-Strasse 25**
**28199 Bremen (DE)**

(56) Entgegenhaltungen:
**EP-A- 1 410 060      DE-A1- 3 446 658**
**DE-A1- 10 352 738      US-A- 3 594 718**

**Beschreibung**

Die Erfindung betrifft ein Verfahren zum passiven Bestimmen von Zieldaten durch richtungsselektiven Empfang von Schallwellen der im Oberbegriff von Anspruch 1 genannten Art sowie eine entsprechende Vorrichtung der im Oberbegriff von Anspruch 15 genannten Art.

Um ohne Eigenverrat von einem Trägerfahrzeug, z.B. einem Oberflächenschiff oder U-Boot, Zieldaten, wie Position, Geschwindigkeit und Kurs eines Ziels, z.B. eines Oberflächenschiffs, U-Boots oder eines sonstigen, insbesondere schnell laufenden Ziels als Zieldaten zu bestimmen, werden herkömmlicherweise mit einer Sonar-Empfangsanlage Schallwellen eines von diesem Ziel abgestrahlten Zielgeräuschs empfangen und Peilwinkel zum Ziel gemessen. Aus diesen Peilwinkeln wird zusammen mit der Eigenposition des Trägerfahrzeugs eine Position des Ziels geschätzt und ein zugehöriger geschätzter Peilwinkel berechnet. Iterativ wird die Differenz zwischen dem gemessenen und dem geschätzten Peilwinkel so lange verkleinert, bis eine Fehlergrenze unterschritten ist. Die zugrundeliegende geschätzte Position wird als Zielposition erkannt.

Ausgehend von einer Anfangsposition des Ziels, die z.B. willkürlich als Startposition auf einem ersten Peilstrahl gewählt wird oder durch andere an Bord befindliche Sensoren bekannt ist, werden Positionen aus geschätzten X-Y-Komponenten für das Ziel berechnet und daraus geschätzte Peilwinkel bestimmt. Das Trägerfahrzeug fährt für die Peilwinkelmessunge-n mit konstantem Kurs und konstanter Geschwindigkeit und legt einen Weg zurück, der Eigenleg genannt wird. Für eine erste Bestimmung der Zieldaten ist es notwendig, dass das Trägerfahrzeug ein Manöver durchfährt und seinen Kurs oder seine Geschwindigkeit ändert und so ein neues Eigenleg aufmacht. Die nächsten Peilwinkelmessungen ermöglichen dann eine erste Zieldatenbestimmung.

Ferner ist aus der den Oberbegriff der unabhängigen Ansprüche bildenden EP 1 410 060 B1 bekannt, ohne Manöver des Trägerfahrzeugs Zieldaten zu bestimmen, indem die richtungsselektiv zu Gruppensignalen zusammengefassten Empfangssignale einer elektroakustischen Wandleranordnung einer Fourier-Transformation unterworfen und die Frequenzen von Spektrallinien im Frequenzspektrum der Gruppensignale bestimmt werden. Die Frequenz einer oder mehrerer zusammengefasster Spektrallinien wird als Empfangsfrequenz zusammen mit dem gemessenen Peilwinkel der Zieldatenschätzung zugrundegelegt. Es werden Zielpositionen geschätzt und dazu geschätzte Peilwinkel ermittelt. Zwischen dem gemessenen und geschätzten Peilwinkel wird eine Peilwinkeldifferenz bestimmt. Außerdem wird aus den gleichen geschätzten Zielpositionen und ihren zeitlichen Änderungen eine Dopplerverschiebung und eine vom Ziel abgestrahlte oder ausgesendete Sendefrequenz geschätzt. Die geschätzte Sendefrequenz wird entsprechend der geschätzten Dopplerverschiebung frequenzverschoben und bildet die geschätzte Dopplerfrequenz von der die Empfangsfrequenz abgezogen wird. Der Unterschied zwischen Empfangsfrequenz und geschätzter Dopplerfrequenz wird als Differenzfrequenz zusammen mit der Peilwinkeldifferenz für die Bestimmung der Zieldaten nach dem sog. Least-Square-Algorithmus verwendet.

Weitere Verfahren zur Zieldatenbestimmung sind aus DE 34 46 658 C2 und DE 103 52 738 A1 bekannt.

DE 34 46 658 C2 zeigt ein Filter zur Bestimmung von Zieldaten, bei dem aus gemessenen Peilwinkeln in einer iterativen Signalverarbeitung optimale Filterkoeffizienten ermittelt werden. Mit diesen Filterkoeffizienten und den gemessenen Peilwinkeln wird eine Akkumulationsschaltung angesteuert, die Korrekturwerte für eine Anfangsschätzung der Zieldaten bestimmt. Das Filter weist Multiplikationsschaltungen zum Ermitteln der Koeffizienten für dynamische Zieldaten auf. Dieses Filter wird zur passiven Bestimmung von Positions- und Bewegungsdaten von Zielfahrzeugen verwendet.

DE 103 52 738 A1 beschreibt, wie aus geschätzten Peilwinkeln, die aus geschätzten Zielpositionen ermittelt werden, und gemessenen Peilwinkeln Peilwinkeldifferenzen zwischen gemessenen und geschätzten Peilwinkeln iterativ minimiert werden. Zur Verkürzung der Iterationszeit werden Grenzwerte für die Entfernung, den Kurs und/oder die Geschwindigkeit des Ziels vorgegeben und auf einen Peilstrahl unter einem gemessenen Peilwinkel aus diesen Grenzwerten Randbedingungen für Positionskomponenten und Geschwindigkeitskomponenten zum Schätzen der Zielposition ermittelt, die zur Minimierung der Peilwinkeldifferenz verwendet werden.

Bei den genannten Verfahren zur Bestimmung von Zieldaten werden jeweils Messwerte (Peilwinkel bzw. Frequenzen) aus einem zurückliegenden vorbestimmt langen Zeitabschnitt für eine aktuelle Zieldatenschätzung herangezogen. D.h. es wird der Verlauf des Ziels über einen langen vordefinierten Zeitabschnitt, bspw. eine Stunde, betrachtet und dieser Verlauf für die aktuellen Zieldatenschätzungen verwendet. Für die Bestimmung eines neuen Satzes von Zieldaten werden daher die Messwerte dieses vergangenen Zeitraums herangezogen und einer Filterung unterzogen. Das entsprechende Filter weist daher eine feste Filterlänge auf, die diesem vordefinierten Zeitabschnitt entspricht. Die Zieldatenschätzung ist daher recht träge und liefert nach Kurs- und/oder Geschwindigkeitsänderungen des Ziels unter Umständen erst nach einer Zeit, die der Filterlänge entspricht, wieder zutreffende Ergebnisse. D.h. das Zielmanöver muss soweit zurückliegen, dass es nicht mehr in den von der Filterlänge betrachteten Zeitraum fällt. Die Zieldatenschätzung liefert zuverlässig gute Zieldaten, wenn sich ein Ziel gleichförmig relativ zum Trägerfahrzeug bewegt. Sobald jedoch ein Ziel seinen Kurs oder seine Geschwindigkeit ändert, insbesondere in der näheren Umgebung des Trägerfahrzeugs Manöver durchführt, verschlechtern sich die geschätzten Zieldaten signifikant und konvergieren erst wieder, wenn das Ziel längere Zeit auf konstantem Kurs unbeschleunigt weiterfährt.

Der Erfindung liegt daher das Problem zugrunde, schnell konvergierende Zieldaten von Zielen ohne die Notwendigkeit von Eigenmanövern zu ermitteln, selbst wenn diese Ziele Zielmanöver ausführen und/oder schnell an- oder ablaufende Ziele sind.

Die Erfindung löst dieses Problem mit einem Verfahren gemäß Anspruch 1 sowie mit einer Vorrichtung gemäß Anspruch 15.

Die mittels einer Anordnung von Wasserschallaufnehmern, wie elektroakustischen oder optoakustischen Wandlern, einer Sonar-Empfangsanlage zu einem Ziel gemessenen Peilwinkel werden in aufeinanderfolgenden Verarbeitungszyklen zu Zieldaten verarbeitet. Dabei wird je Verarbeitungszyklus wenigstens ein Zieldatum, insbesondere jedoch ein Satz von Zieldaten geschätzt. In diese Schätzung fließen jedoch nicht nur die während eines Verarbeitungszyklus gewonnenen Peilwinkel und/oder Zieldaten ein, sondern es fließen vielmehr die aus einer Gruppe aufeinanderfolgender Verarbeitungszyklen, nämlich aus einer als Filterlänge bezeichneten Anzahl vorangegangener Verarbeitungszyklen, gemessenen Peilwinkel und/oder Zieldaten in die Schätzung ein.

Die Erfindung hat erkannt, dass diese Filterlänge in vielen Fällen vorteilhaft besonders kurz gewählt werden kann, um schnell anlaufende Ziele, die vorzugsweise zudem Zielmanöver ausführen, mit einer hohen Güte der geschätzten Zieldaten verfolgen zu können. Die Schätzergebnisse konvergieren bei Zielen in kurzer Entfernung und kurzer Filterlänge schnell, selbst wenn ein Ziel im Nahbereich Manöver vollführt. Daher können zeitnah gute Schätzwerte für Zieldaten erhalten werden. Die Gefahr etwaiger Kollisionen kann daher drastisch reduziert werden.

Die Erfindung sieht vor, die Filterlänge immer wieder, insbesondere während jedes Verarbeitungszyklus, neu zu bestimmen und dabei die Filterlänge für jedes Ziel individuell, automatisch und dynamisch einzustellen. Auf diese Weise kann den Bewegungsdaten, wie Kurs, Geschwindigkeit und Zielentfernung jedes Ziels optimal Rechnung getragen werden. Insgesamt ermöglicht die Erfindung somit auch eine hohe Güte von Zieldatenschätzwerten, insbesondere Zielentfernungsschätzwerten im Nahbereich der Sonar-Empfangsanlage bereitzustellen.

Sofern mehrere Ziele vorhanden sind, wird jedem Ziel wenigstens eine eigene Filterlänge zugeordnet, die in Abhängigkeit geschätzter Zieldaten bestimmt wird.

Unterschiedliche Ziele werden somit mit unterschiedlichen Filterlängen behandelt. Beispielsweise können die Zieldaten eines Ziels in einem ungünstigen Empfangssektor mit einer größeren Filterlänge geschätzt werden als die Zieldaten eines Ziels in einem günstigeren Empfangssektor. Dies führt zu signifikant besseren Ergebnissen der letztlich bestimmten Zieldaten.

Die Erfindung ist nicht auf die Anwendung des Verfahrens in Trägerfahrzeugen, insbesondere Überwasser- oder Unterwasserfahrzeugen beschränkt. Vielmehr kann die Erfindung auch bei fest installierten Sonaranlagen, bspw. zur Überwachung von Küsten, Wasserstraßen und/oder Hafenanlagen oder auf See installierter Einrichtungen, wie Ölbohrplattformen, eingesetzt werden, da die Schätzung der Zieldaten ohne Eigenmanöver möglich ist.

Erfindungsgemäß wird die Filterlänge in Abhängigkeit von einer geschätzten Zielentfernung bestimmt. Die Abhängigkeit ist dabei derart gewählt, dass Zieldaten eines sich annähernden Ziels mit einer kürzeren Filterlänge geschätzt werden als Zieldaten eines sich entfernenden Ziels. Wenn ein sich im Nahfeld der eigenen Sonaranlage befindendes Ziel seinen Abstand laufend verkleinert, besteht eine größere Kollisionsgefahr als bei einem sich in größerer Entfernung befindenden Ziel, so dass die Schätzung der Zieldaten, insbesondere der Zielentfernung, die sich in kurzer Zeit signifikant ändert, in kurzen Zeitabständen von großem Interesse ist. Durch eine Verkürzung der Filterlänge bei sich nähernden Zielen bzw. eine Verlängerung der Filterlänge bei sich entfernenden Zielen wird die Bestimmung der Zieldaten an die Genauigkeit der Peilwinkelmessungen und die Gefahrensituation angepasst.

Bei einer besonders bevorzugten Ausführungsform werden im Wesentlichen gleichzeitig Peilwinkel mit zwei voneinander beabstandeten Anordnungen von Wasserschallaufnehmern gemessen, um aus auf diese Weise gemessenen Peilwinkeln mittels Differenzbildung einen Parallaxewert und zwar den Absolutwert des Parallaxewertes zu bestimmen. Dabei wird die Filterlänge in Abhängigkeit von diesem Parallaxewert bestimmt. Die Abhängigkeit ist dabei derart gewählt, dass bei Zunahme des Parallaxewerts die Filterlänge verkleinert bzw. bei Abnahme des Parallaxewerts die Filterlänge vergrößert wird, wobei vorliegend der Parallaxewert als vorzeichenloser Wert, d.h. als Absolutwert zu verstehen ist, soweit nichts anderes angegeben ist.

Bei dieser Ausführungsform wird nach Art einer Kreuzpeilung ein Parallaxewert ermittelt, indem von zwei verschiedenen Wasserschallaufnehmeranordnungen Peilwinkel zu einem Ziel gemessen und der Betrag einer Differenz der auf diese Weise gemessenen Peilwinkel ermittelt wird. Unter Berücksichtigung des Abstands der Wasserschallaufnehmeranordnungen zueinander werden die Peilwinkel zum Ziel zu einem Peildreieck kombiniert, das regelmäßig einen spitzen Winkel aufweist. Dieser spitze Winkel entspricht dem Parallaxewert. Aus diesem Parallaxewert sowie dem Abstand der Wasserschallaufnehmeranordnungen wird eine Entfernung zum Ziel geschätzt. Je größer der Parallaxewert ist, desto kürzer ist die Zielentfernung. Je größer der Parallaxewert und damit regelmäßig einhergehend je geringer die Zielentfernung ist, desto präziser können Zieldaten geschätzt werden. Daher ist eine lange Historie von Messwerten bei Zielen im Nahfeld weniger wichtig als bei Zielen, die sich weiter entfernt befinden. Insbesondere gibt jedoch ein großer Parallaxewert einen Hinweis darauf, dass Zieldaten einer hohen Güte erhalten werden können, selbst wenn die Filterlänge klein gewählt wird. Eine Abhängigkeit der Filterlänge vom Parallaxewert ist daher besonders vorteilhaft.

Vorzugsweise wird für eine erste Anordnung von Wasserschallaufnehmern eine Seitenantenne bzw. ein Flank Array und für eine zweite Anordnung von Wasserschallaufnehmern eine Schleppantenne bzw. ein Towed Array verwendet. Derartige Antennen sind besonders vorteilhaft, da sie einen großen Abstand ihrer akustischen Zentren zueinander aufweisen.

Alternativ wird vorzugsweise für eine erste Anordnung von Wasserschallaufnehmern eine Seitenantenne bzw. ein Flank Array und für eine zweite Anordnung von Wasserschallaufnehmern eine Zylinderbasis verwendet. Üblicherweise ist der Abstand des akustischen Schwerpunkts derartiger Antennen signifikant geringer als der Abstand der akustischen Zentren von einer Seitenantenne bzw. einem Flank Array zu einer Schleppantenne bzw. einem Towed Array. Dieser geringere Abstand ist günstig zur Parallaxewertbestimmung bei kürzerer Zielentfernung. Diese Kombination von Antennen wird daher vorzugsweise dann verwendet, wenn keine Schleppantenne eingesetzt werden kann.

Bei einer weiteren besonderen Ausführungsform wird bezüglich der von der ersten Anordnung von Wasserschallaufnehmern und bezüglich der von der zweiten Anordnung von Wasserschallaufnehmern gemessenen Peilwinkel jeweils ein Wert für eine Streuung, bspw. die Standardabweichung oder Varianz, ermittelt und die Filterlänge in Abhängigkeit von den ermittelten Streuungswerten bestimmt. Dabei ist die Abhängigkeit zwischen der Filterlänge und den ermittelten Streuungswerten derart gewählt, dass bei Abnahme der Streuungswerte die Filterlänge verkleinert bzw. bei Zunahme der Streuungswerte die Filterlänge vergrößert wird. Dies ist vorteilhaft, da bei größeren Streuungen die Unsicherheit bzgl. der Messwerte relativ groß ist. Diese Unsicherheit wird durch längere Filterlängen und damit Beobachtungen über längere Zeiträume zumindest teilweise wieder kompensiert. Insgesamt lassen sich auf diese Weise weiter verbesserte Ergebnisse bei der Bestimmung von Zieldaten erhalten.

Bei einer weiteren besonderen Ausführungsform wird für die Ermittlung eines aktuellen Streuungswerts eine Anzahl von gemessenen Peilwinkeln, insbesondere die während eines Verarbeitungszyklus gemessenen Peilwinkel, herangezogen und über mehrere derartig ermittelte vorherige Streuungswerte gemittelt. Dies führt zu einer höheren Genauigkeit der Streuungswerte, da diese über einen längeren Zeitraum beobachtet werden können. Insgesamt ergeben sich damit weiter verbesserte Ergebnisse bei der Bestimmung von Zieldaten.

Bei einer weiteren besonderen Ausführungsform wird ein aktueller Parallaxewert aus einer Mittelwertbildung einer Anzahl vorhergehend bestimmter Parallaxewerte und ggf. eines aktuell gemessenen Parallaxewertes errechnet. Da die gemessenen Peilwinkel mit Ungenauigkeiten behaftet sind, die auf verschiedene Schallausbreitungswege und andere Störeinflüsse zurückzuführen sind, ist eine Mittelwertbildung vorteilhaft, um die Streuung der gemessenen Peilwerte rechnerisch zu reduzieren.

Vorteilhafterweise werden dabei die Parallaxewerte jeweils mittels Differenzwertbildung von vorgefilterten gemessenen Peilwinkeln jeweils beider Wasserschallaufnehmeranordnungen bestimmt. D.h. die gemessenen Peilwinkel werden einer Vorfilterung unterzogen, um bspw. statistische Ausreißer zu eliminieren. Die auf diese Weise vorgefilterten und bereinigten gemessenen Peilwinkel werden dann zur Parallaxewertbestimmung herangezogen, wobei die von einer Wasserschallaufnehmeranordnung ermittelten Peilwinkel von den entsprechenden Peilwinkeln der anderen Wasserschallaufnehmeranordnung ermittelten Peilwinkeln abgezogen werden, um jeweils entsprechende Parallaxewerte zu erhalten.

Bei einer weiteren bevorzugten Ausführungsform wird die Filterlänge für einen aktuellen Verarbeitungszyklus gleich einer neu errechneten Filterlänge gewählt, falls die neue Filterlänge nicht größer ist als die im vorhergehenden Verarbeitungszyklus bestimmte Filterlänge. Auf diese Weise kann die Filterlänge immer so klein wie möglich gewählt werden, wobei einer Verkürzung der Filterlänge keine Grenzen gesetzt sind. D.h. die Filterlänge kann auch um Schritte verkürzt werden, die größer als 1 sind. Bevorzugt ist jedoch eine minimale Filterlänge vorgegeben, die bspw. den Wert "3" hat.

Bei einer weiteren besonderen Ausführungsform wird die neue Filterlänge aus dem aktuellen Parallaxewert sowie den ermittelten Streuungswerten als ganze Zahl bestimmt. Vorzugsweise erfolgt diese Bestimmung anhand folgender Gleichung:

$$FL0 = \text{Int} \left[ a + b / (P_n + c) \right]$$

wobei FL0 die neue Filterlänge, $P_n$ der aktuelle (absolute) Parallaxeschätzwert sowie a, b und c vorbestimmte, von den ermittelten Streuungswerten abhängige Koeffizienten sind und Int die Bildung einer ganzen Zahl, insbesondere der nächst höheren oder nächst niedrigeren ganzen Zahl, angibt. Diese Gleichung ist eine gute Approximation der Abhängigkeit zwischen geschätzten Parallaxewerten und der zu bestimmenden Filterlänge. Diese Abhängigkeit ist empirisch ermittelt. Die Filterlänge in Abhängigkeit der Parallaxe lässt sich daher auch mittels anderer Gleichungen mit ähnlichem Verlauf ausreichend gut beschreiben.

Bei einer weiteren bevorzugten Ausführungsform wird die Filterlänge für einen aktuellen Verarbeitungszyklus um maximal 1 größer gewählt als die im vorhergehenden Verarbeitungszyklus bestimmte Filterlänge, falls eine neu errechnete Filterlänge FL0 größer ist als die im vorhergehenden Verarbeitungszyklus bestimmte Filterlänge. Die neue Filterlänge wird somit maximal um 1 vergrößert. Dieser auf 1 begrenzte Schritt ist ausreichend und hält die Filterlänge kurz. Dies liegt daran, dass Daten, die im vorangegangenen Verarbeitungszyklus nicht für ein gutes Ergebnis bei der Bestimmung der Zieldaten erforderlich waren (also schon aus der vorhergehenden, alten Filterlänge herausgefallen waren), auch nicht im darauffolgenden Verarbeitungszyklus erforderlich sind.

Bei einer weiteren besonderen Ausführungsform wird die Filterlänge für den aktuellen Verarbeitungszyklus gleich der Filterlänge des vorhergehenden Verarbeitungszyklus gewählt, falls der größte geschätzte - in den innerhalb der Filterlänge liegenden vorangegangenen Verarbeitungszyklen liegende - Parallaxewert größer ist als ein für die im vorhergehenden Verarbeitungszyklus gewählte Filterlänge benötigter Parallaxewert. Die Filterlänge wird somit vorteilhafterweise durch den größten Parallaxewert im durch die Filterlänge bestimmten Filterfenster bestimmt. Hierdurch erreicht man, dass die Filterlänge schnell abnimmt, solange die Parallaxe immer größer wird, bspw. da sich das Ziel schnell annähert oder sich in einen günstigeren Empfangssektor, insbesondere in einen Bereich querab zum Trägerfahrzeug, bewegt. Ferner erreicht man, dass die Filterlänge des vorhergehenden Verarbeitungszyklus in vielen Fällen noch beibehalten werden kann, falls die Parallaxe wieder abnimmt, bspw. weil sich das Ziel wieder entfernt oder in einen schlechteren Empfangssektor hineinläuft.

Bei einer weiteren besonderen Ausführungsform wird der benötigte Parallaxewert aus den ermittelten Streuungswerten und der Filterlänge des vorhergehenden Verarbeitungszyklus bestimmt. Bevorzugterweise erfolgt diese Bestimmung anhand folgender Gleichung:

$$P_b = (a + b) / FL_{n-1} - c$$

wobei $P_b$ der benötigte Parallaxewert, a, b und c vorbestimmte, von den ermittelten Streuungswerten abhängige Koeffizienten und $FL_{n-1}$ die Filterlänge des vorhergehenden Verarbeitungszyklus sind. Bei dieser Gleichung handelt es sich um die weiter oben beschriebene Umkehrfunktion zur Ermittlung der Filterlänge aus einem geschätzten Parallaxewert. Diese Gleichung kann in idealer Weise umgestellt werden, um den benötigten Parallaxewert zu bestimmen.

Bei einer weiteren bevorzugten Ausführungsform wird mit der auf diese Weise dynamisch bestimmten Filterlänge eine Entfernung zu einem Ziel geschätzt und wenigstens eine weitere Filterlänge für die Schätzung von Kurs und/oder Geschwindigkeit dieses Ziels bestimmt. Dabei wird diese weitere Filterlänge wenigstens so groß wie die Filterlänge für die Entfernungsschätzung gewählt. Somit kann dem Umstand Rechnung getragen werden, dass gute Schätzungen eines Zielkurses und einer Zielgeschwindigkeit mit größeren Filterlängen erreichbar sind, während gute Schätzungen der Zielentfernung, insbesondere im Nahbereich zum Trägerfahrzeug mit möglichst kurzen Filterlängen erreichbar sind.

Bei einer weiteren besonderen Ausführungsform wird auch die weitere Filterlänge automatisch und dynamisch, insbesondere während jedes Verarbeitungszyklus neu bestimmt. Die dabei für diese weitere Filterlänge heranzuziehenden Koeffizienten (a, b und c) sind vorteilhafterweise jedoch andere als die für die zur Entfernungsschätzung herangezogenen Koeffizienten.

Bei einer weiteren bevorzugten Ausführungsform tragen auf Eigenmanöver des Trägerfahrzeugs zurückgehende Parallaxewertänderungen nicht zu einer Änderung der Filterlänge bei. Im Falle eines Eigenmanövers ergeben sich erhebliche Änderungen der Parallaxe zu einem Ziel. Jedoch kann eine aufgrund einer Erhöhung der Parallaxewerte reduzierte Filterlänge in einem derartigen Fall zu verschlechterten Ergebnissen bei der Zieldatenschätzung führen. Wird hingegen eine Parallaxeänderung aufgrund von Eigenmanövern ignoriert, kann die Filterlänge groß gehalten werden, so dass auch Peilwinkel weiter zurückliegender Verarbeitungszyklen für die Bestimmung von Zieldaten herangezogen werden. Dies führt im Ergebnis zu wesentlich besseren Schätzungen der gesuchten Zieldaten.

Bei einer besonders bevorzugten Ausführungsform wird eine geschätzte Zielentfernung mit einer vorgebbaren Minimalentfernung verglichen und bei Unterschreiten der Minimalentfernung eine Warnung wegen Gefährdung der Sicherheit des Trägerfahrzeugs angezeigt. Auf diese Weise kann eine automatische Kollisionswarnung ausgegeben werden, wenn sich ein Ziel zu dicht beim Trägerfahrzeug befindet. Dies ist besonders vorteilhaft, wenn das Trägerfahrzeug ein U-Boot ist, das aufzutauchen beabsichtigt. Dieses U-Boot hat nämlich aus Gründen der Kollisionsvermeidung ein großes Interesse daran, dass das Seegebiet um die Auftauchposition herum frei von anderen Schiffen ist. Die Sicherheit im Seeverkehr kann somit signifikant erhöht werden.

Weitere bevorzugte Ausführungsformen ergeben sich aus den Unteransprüchen, insbesondere indem eine erfindungsgemäße Vorrichtung Mittel zur Durchführung eines oder mehrerer Verfahrensschritte gemäß den auf das erfindungsgemäße Verfahren rückbezogenen Unteransprüchen aufweist, sowie aus den anhand der beigefügten Zeichnung näher erläuterten Ausführungsbeispielen. In der Zeichnung zeigen:

Fig. 1    ein U-Boot in einer Ansicht von oben zur Erläuterung eines Peildreiecks,

Fig. 2    ein Blockschaltbild zur Veranschaulichung eines Verfahrens sowie einer Sonaranlage mit zwei Wandleranordnungen gemäß einem Ausfüh- rungsbeispiel der Erfindung,

Fig. 3    ein Szenarium mit Peilungen von einem Trägerfahrzeug zu einem Ziel,

Fig. 4    ein zu dem Szenarium gemäß Fig. 3 gehöriger zeitlicher Verlauf des Parallaxewerts,

Fig. 5    ein Zeitdiagramm der Entfernungsschätzung bei einem Szenarium ge- mäß Fig. 3,

Fig. 6    ein funktionaler Zusammenhang von Vergleichsentfernung und Peilwin- kel,

Fig. 7    eine Kurvenschar zur Erläuterung der erfindungsgemäßen Abhängigkeit einer Filterlänge von einer geschätzten Parallaxe für verschiedene Kombinationen von Streuungen gemessener Peilwinkel,

Fig. 8    ein Flussdiagramm zur Erläuterung der Bestimmung der Filterlänge,

Fig. 9    ein weiteres Szenarium mit Peilungen von einem Trägerfahrzeug zu einem Ziel,

Fig. 10    einen Verlauf einer dynamisch bestimmten Filterlänge für das in Fig. 9 gezeigte Szenarium und

Fig. 11    einen Verlauf eines Schätzfehlers der geschätzten Entfernung vom Trä- gerfahrzeug zum Ziel für das in Fig. 9 gezeigte Szenarium.

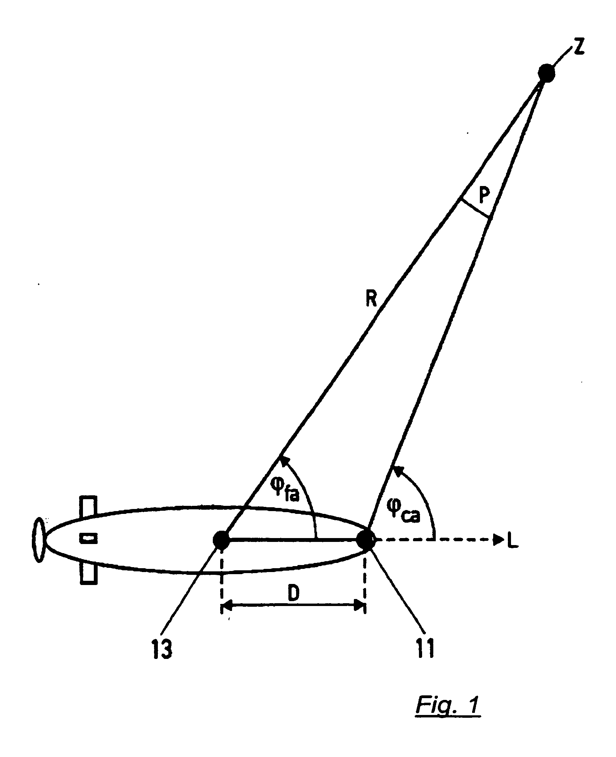

Fig. 1 zeigt ein U-Boot 10 mit einer Längsachse L in einer Ansicht von oben. An Bord des U-Boots 10 befindet sich im Bug eine erste Wandleranordnung mit elektroakustischen Wandlern in Form einer Zylinderbasis 11. Empfangssignale der Zylinderbasis 11 werden in einer Sonarempfangsanlage in Form einer Passiv-Panoramaanlage zu Gruppensignalen benachbarter Richtcharakteristiken in einem Richtungsbildner 12 zusammengefasst, die rundum richtungsselektiv entsprechend der Hauptempfangsrichtungen der Richtcharakteristiken Schall empfängt. Die Hauptempfangsrichtungen weisen senkrecht zu jeweils um einen Wandler versetzte Sehnen eines mit Wandlern besetzten Kreisbogens der Zylinderbasis 11, indem die Empfangssignale der elektroakustischen Wandler entsprechend ihrem Abstand vom Kreisbogen zur Sehnen laufzeit- oder phasenverzögert werden und zu Gruppensignalen aufaddiert werden. Mit der Zylinderbasis 11 wird ein Ziel Z unter einem schiffsbezogenen Peilwinkel $\varphi_{ca}$ detektiert. Die Längsachse L des U-Boots ist die Bezugsachse für die Peilwinkel $\varphi_{ca}$.

Mit einer im Abstand D zur Wandlerposition der ersten Wandleranordnung angeordneten zweiten Wandleranordnung in Form einer Seitenantenne 13, eines sog. Flank Array, wird das gleiche Ziel Z unter einem Peilwinkel $\varphi_{fa}$ gepeilt. Die Empfangssignale der Seitenantenne 13 werden dazu in einem zweiten Richtungsbildner 14 entsprechend unterschiedlichen virtuellen Schwenkungen der Seitenantenne 13 verzögert und zu Gruppensignalen addiert, so dass ein Fächer von Richtcharakteristiken aufgespannt wird, deren benachbarte Hauptempfangsrichtungen einen Sektor seitlich zum U-Boot abdecken. Mit der Seitenantenne 13 wird das Ziel Z unter einem Peilwinkel $\varphi_{fa}$, bezogen auf die Längsrichtung L, gepeilt. Die Peilwinkel $\varphi_{ca}$ und $\varphi_{fa}$ bilden zusammen mit dem Abstand D ein Peildreieck, an dessen Spitze das Ziel Z liegt. Die Entfernung R zum Ziel Z ist sehr viel größer als der Abstand D der beiden Wandleranordnungen, die Peilwinkel $\varphi_{ca}$ und $\varphi_{fa}$ sind nahezu gleich und unterscheiden sich nur um einen Parallaxewert P.

Bei einem alternativen Ausführungsbeispiel ist zusätzlich oder alternativ zur Zylinderbasis 11 oder zur Seitenantenne 13 eine Schleppantenne, ein sog. Towed Array, vorgesehen, mit der das Ziel Z unter einem Peilwinkel $\varphi_{ta}$ gepeilt wird. Die Schleppantenne wird in einem bekannten Abstand D' zur Zylinderbasis 11 bzw. Seitenantenne 13 hinter dem U-Boot hergeschleppt. Die Empfangssignale der Schleppantenne werden dazu in einem weiteren Richtungsbildner entsprechend unterschiedlichen virtuellen Schwenkungen der Schleppantenne verzögert und zu Gruppensignalen addiert, so dass ein Fächer von Richtcharakteristiken aufgespannt wird, deren benachbarte Hauptempfangsrichtungen einen Sektor seitlich zur Schleppantenne abdecken. Die Peilwinkel $\varphi_{ta}$ und $\varphi_{fa}$ bzw. $\varphi_{ta}$ und $\varphi_{ca}$ bilden zusammen mit dem Abstand D' wiederum ein Peildreieck, an dessen Spitze das Ziel Z liegt. Die Peilwinkel $\varphi_{ta}$ und $\varphi_{fa}$ bzw. $\varphi_{ta}$ und $\varphi_{ca}$ sind wiederum nahezu gleich und unterscheiden sich nur um einen Parallaxewert P'.

Die nachfolgenden Erläuterungen beziehen sich auf das in Fig. 1 gezeigte Ausführungsbeispiel mit Zylinderbasis 11 und Seitenantenne 13; die Erläuterungen treffen jedoch analog auf die vorstehend genannten alternativen Ausführungsbeispiele zu, bei denen zusätzlich oder alternativ zur Zylinderbasis 11 und Seitenantenne 13 eine Schleppantenne verwendet wird.

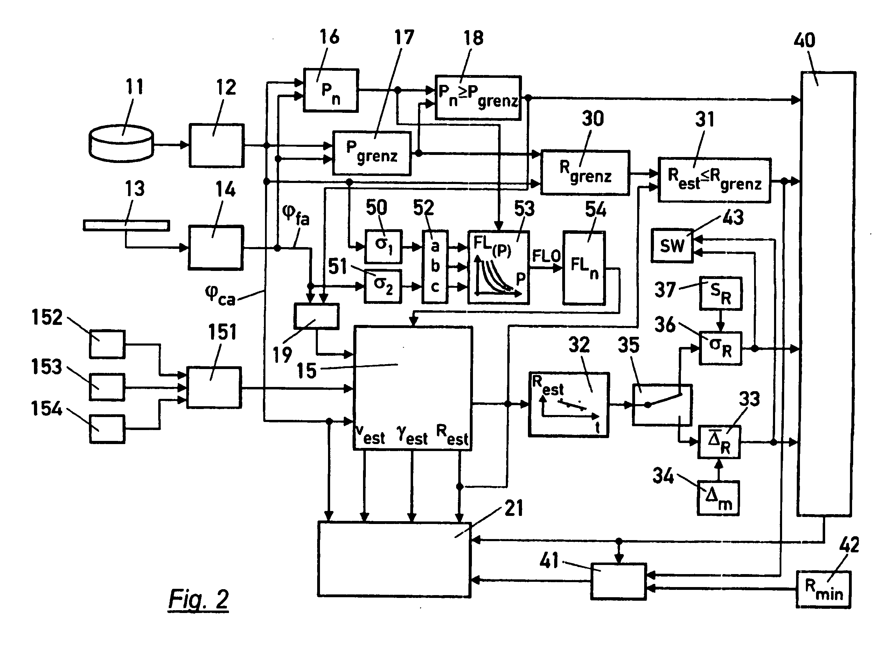

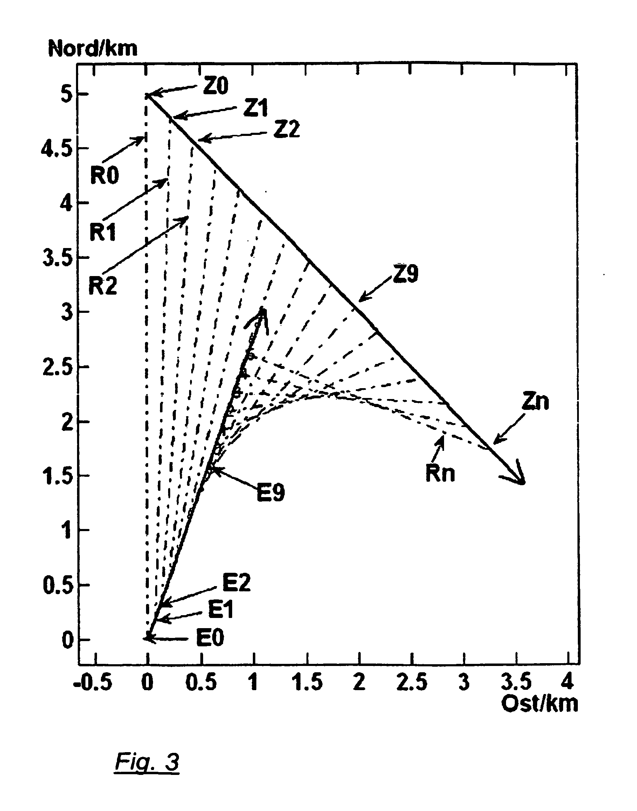

Gemäß Fig. 2 befindet sich an Bord des U-Boots 10 in der Sonarempfangsanlage (z.B. der Zylinderbasis 11) ein Schätzfilter 15 zum passiven Bestimmen von Zieldaten aus Peilwinkeln $\varphi_{ca1}$, $\varphi_{ca2}$, ... $\varphi_{can}$. Diese Peilwinkel werden bei konstanter Fahrt des U-Boots längs eines sog. Eigenlegs an Eigenpositionen des U-Boots $E_0$, $E_1$, ... , $E_n$ zum Ziel Z gemessen, während sich das Ziel Z mit konstanter Geschwindigkeit v auf einem Zielkurs $\gamma$ von der Zielposition $Z_0$ bis zu der Zielposition $Z_n$ bewegt. Fig. 3 zeigt diese Bewegungen in einem rechtwinkligen Nord-Ost-Koordinatensystem mit Kilometereinteilung, dessen Ursprung die Eigenposition $E_0$ zum Zeitpunkt t = 0 ist. Die Entfernungen zum Ziel $R_0$, $R_1$,... $R_n$ sind ebenfalls Fig. 3 zu entnehmen.

Im einem herkömmlichen Schätzfilter 15, das beispielsweise in DE-PS 3 446 658 beschrieben ist, können erste Zieldaten aus Peilwinkeln $\varphi_{ca}$ erst dann ermittelt werden, wenn das U-Boot ein Eigenmanöver fährt und auf einem zweiten Eigenleg unter einem Winkel zum ersten Eigenleg oder mit veränderter Geschwindigkeit seine Fahrt fortsetzt. Die auf dem zweiten Eigenleg gemessenen Peilwinkel werden nunmehr zusammen mit den auf dem ersten Eigenleg gemessenen Peilwinkeln verknüpft und erlauben eine Schätzung der Entfernung zum Ziel, indem Peilwinkeldifferenzen nach dem Prinzip der kleinsten Fehlerquadrate iterativ minimiert werden. Im Schätzfilter 15 werden dazu die geschätzten Peilwinkel aus der jeweils nächsten geschätzten Position des Ziels ermittelt, die durch Vorgabe einer geschätzten Geschwindigkeit und eines geschätzten Kurses vom Ziel als nächste Zielposition eingenommen wird. Wenn die Summe der Peilfehler zwischen den geschätzten und gemessenen Peilwinkeln einen vorgebbaren Fehler unterschreitet, ist die bestmögliche Schätzung der Zielkoeffizienten, Entfernung, Kurs und Geschwindigkeit erkannt.

Das Schätzfilter 15 benutzt zum Schätzen der Zieldaten zu jeder Peilmessung einer Wandleranordnung die entsprechende Wandlerortsposition zum Messzeitpunkt des Peilwinkels. Diese Wandlerortspositionen werden in einem Positionsrechner 151 aus der von einer integrierten Navigationsanlage 152 berechneten Eigenposition des U-Boots mit Hilfe einer Inertialplattform, aus der mit einem Kompass 153 aktuell ermittelten Längsrichtung L des U-Boots 10 sowie den Distanzen der Einbauorte der Wandleranordnungen zu dem Einbauort der Inertialplattform ermittelt. Die exakten Einbauorte sind als Distanzen zur Längs- und Querrichtung des U-Boots 10 in einem Speicher 154 in Tabellen abgelegt, die von der Werft erstellt und geliefert werden.

Statt eines Manövers des Trägerfahrzeugs werden zum Ermitteln der Zieldaten im Schätzfilter 15 erfindungsgemäß Peilwinkel $\varphi_{fa}$ einer zweiten Wandleranordnung und ein geschätzter Parallaxewert berücksichtigt. Durch Differenzbildung der beiden gemessenen Peilwinkel $\varphi_{ca}$ und $\varphi_{fa}$ wird der einem n-ten Verarbeitungszyklus zum Schätzen eines Zieldatensatzes zugeordnete Parallaxewert $P_n$, den Fig. 1 als tatsächlichen Parallaxewert P zeigt, geschätzt. Dazu wird in einem Parallaxerechner 16 ein gleitendes Mittelwertfenster über eine vorgebbare Menge M von Differenzbildungen gelegt, d. h. bei einer Datenrate von z.B. 1 Hz werden dazu 60 Differenzen verwendet:

$$P_n = \left| \frac{1}{M} \sum_{i=1}^{M} (\varphi_{cai} - \varphi_{fai}) \right|$$

Der geschätzte Parallaxewert P wird mit einem in einem Parallaxegrenzwertrechner 17 berechneten Parallaxegrenzwert $P_{Grenz}$ verglichen. Der Parallaxegrenzwert $P_{Grenz}$ kennzeichnet ein Peildreieck, dessen spitzer Winkel deutlich eine Nichtparallelität der Peilstrahlen von der Zylinderbasis 11 und der Seitenantenne 13 gemäß Fig. 1 erkennen lässt. Dieser Parallaxegrenzwert $P_{Grenz}$ wird aus den geschätzten Streuungen $\sigma\varphi_{ca}$, $\sigma\varphi_{fa}$ der Peilwinkelmessungen mit der Zylinderbasis 11 und der Seitenantenne 13 von einer Anzahl $N_{ca}$ bzw. $N_{fa}$ der während eines Verarbeitungszyklus zum Schätzen eines Zieldatensatzes gemessenen Peilwinkel bestimmt:

$$P_0 = \frac{1{,}8 \cdot \sqrt{\sigma\varphi_{ca}^2 + \sigma\varphi_{fa}^2}}{\sqrt{N_{ca} + N_{fa}}}$$

Ein Verarbeitungszyklus dauert beispielsweise 20 Sekunden. Das o.g. Mittelwertfenster erstreckt sich dann über k = 3 Verarbeitungszyklen.

In einer nachgeordneten Vergleichsschaltung 18 wird der im n-ten Verarbeitungszyklus geschätzte Parallaxewert $P_n$ mit dem berechneten Parallaxegrenzwert $P_{Grenz}$ verglichen. Wenn der Parallaxewert $P_n$ gleich oder größer als der Parallaxegrenzwert $P_{Grenz}$ ist, werden über ein Tor 19 die Peilwinkelmessungen $\varphi_{fa}$ der Seitenantenne 13 an das Schätzfilter 15 durchgeschaltet und die gemessenen Peilwinkel $\varphi_{fa}$ der zweiten Wandleranordnung zusammen mit den gemessenen Peilwinkel $\varphi_{ca}$ der ersten Wandleranordnung zum Schätzen der Zieldaten verwendet.

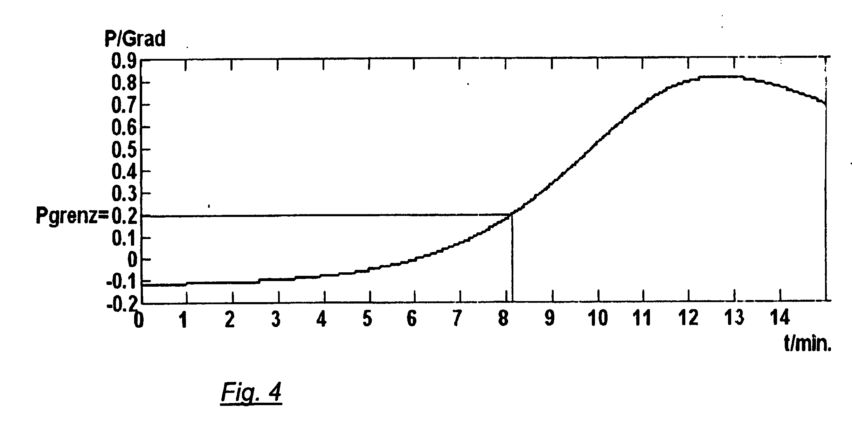

Fig. 4 zeigt den zeitlichen Verlauf des Parallaxewerts für eine Fahrt des Trägerfahrzeugs vom Startpunkt $E_0$ längs seines Eigenlegs gemäß Fig. 3. Bei einem Abstand D=30m der beiden Wandleranordnungen, einer Anzahl N=20 von Peilwinkelmessungen pro Verarbeitungszyklus pro Wandleranordnung und einer jeweiligen Streuung der Peilwinkelmessungen von $\sigma_{ca} = \sigma_{fa} = 0{,}5°$ ergibt sich der Parallaxegrenzwert zu $P_{Grenz} = 0{,}2°$. Am Anfang der Messfahrt ist der Parallaxewert P wegen der großen Entfernung $R_0$ zum Ziel sehr klein, wie Fig. 3 zeigt. Im weiteren Verlauf wird P betragsmäßig noch kleiner und steigt erst wieder an, nachdem das Ziel den Bug passiert hat. Nach gut 8 Minuten ist der Parallaxegrenzwert $P_{Grenz} = 0{,}2°$ überschritten und die Peilwinkelmessungen mit der Seitenantenne 13 am Ausgang des Richtungsbildners 14 werden über das Tor 19 an das Schätzfilter 15 durchgeschaltet.

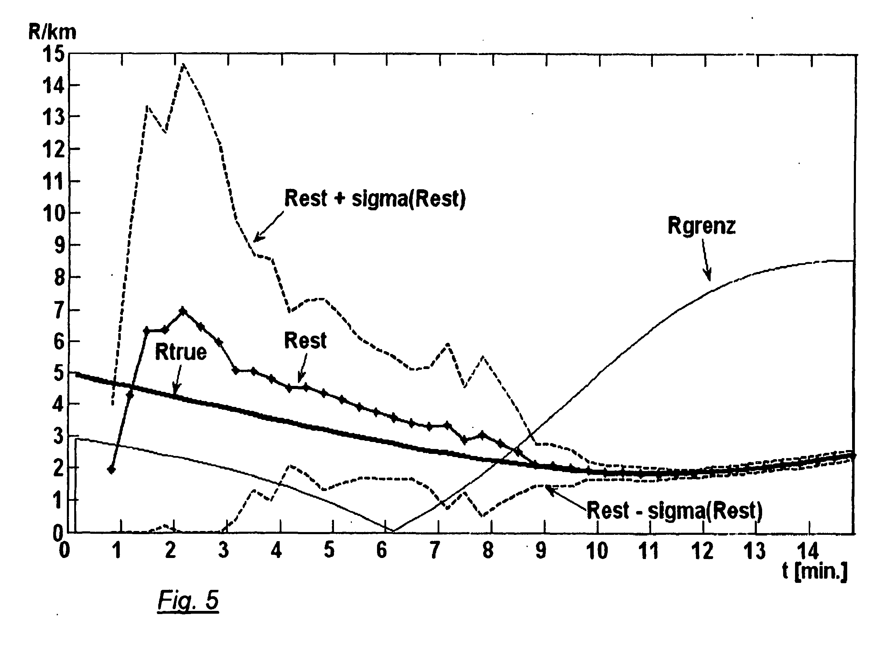

Mit Hilfe des in Fig. 1 gezeigten Peildreiecks wird der zeitliche Verlauf einer Grenz- oder Vergleichsentfernung $R_{Grenz}$ unter Berücksichtigung des gemessenen Peilwinkels $\varphi_{ca}$ entsprechend Fig. 3 für einen Parallaxegrenzwert $P_{Grenz} = 0{,}2°$ berechnet. Fig. 5 zeigt den zeitlichen Verlauf der Vergleichsentfernung $R_{Grenz}$ zusammen mit der geschätzten Entfernung $R_{est}$. Nach gut 8 Minuten ist die geschätzte Entfernung $R_{est}$ unterhalb der Vergleichsentfernung $R_{Grenz}$ und der geschätzte Zieldatensatz kann zur Anzeige gebracht werden.

Die Vergleichsentfernung $R_{Grenz}$ wird in einem Entfernungsrechner 30 gemäß folgender Gleichung berechnet:

$$R_{Grenz} = D \cdot \frac{\sin \varphi_{ca}}{\sin P_{Grenz}}$$

Der Entfernungsrechner 30 ist eingangsseitig mit dem Peilwinkel $\varphi_{ca}$ aus dem Richtungsbildner 12 und dem Parallaxegrenzwert $P_{Grenz}$ aus dem Parallaxegrenzwertrechner 17 beaufschlagt. In einer Entfernungsvergleichsstufe 31 wird die Vergleichsentfernung $R_{Grenz}$ mit der geschätzten Entfernung $R_{est}$ aus dem Schätzfilter 15 verglichen. Für $R_{est} \leq R_{Grenz}$ wird eine Logikschaltung 40 angesteuert, die eingangsseitig ebenfalls mit der Vergleichsschaltung 18 verbunden ist. Der geschätzte Zieldatensatz, bestehend aus der Entfernung zum Ziel Z, der Geschwindigkeit v des Ziels Z und dem Kurs $\gamma$ des Ziels Z, wird durch ein Steuersignal am Ausgang der Logikschaltung 20 zur Anzeige auf einer Lagedarstellung 21 freigegeben, wenn die Logikschaltung 40 gleichzeitig steuernde Signale von den Ausgängen der Vergleichsschaltung 18 und der Entfernungsvergleichsschaltung 31 erhält.

Dieser Zeitpunkt zur Freigabe der Anzeige entspricht der Eigenposition $E_9$ des U-Boots und der Position $Z_9$ des Ziels in Fig. 3. Das Ziel Z hat sich in etwas über 8 Minuten von seiner Startposition $Z_0$ mit der Geschwindigkeit v bis zur Zielposition $Z_9$ auf einem Kurs $\gamma$ geradlinig bewegt. Zu diesem Zeitpunkt beträgt die Entfernung $R_{est} = 2,2$ km zwischen U-Boot und Ziel Z. Der Verlauf des Parallaxewerts P in Fig. 4 und der Vergleichsentfernung $R_{Grenz}$ in Fig. 5 zeigen, dass alle folgenden Zieldatenschätzungen durch die Peilwinkel $\varphi_{fa}$ der zweiten Wandleranordnungen gestützt werden können und kein Eigenmanöver gefahren werden muss.

Die Zieldaten werden beispielsweise alle 20 Sekunden neu geschätzt. Führt man für das in Fig. 3 dargestellte Szenarium Monte-Carlo-Simulationsläufe durch, so erhält man das in Fig. 5 dargestellte Einlaufverhalten der Zieldatenschätzung für die Entfernung R zum Ziel Z. Die wahre Entfernung $R_{true}$ zum Ziel Z zeigt die Kurve, die durchgezogen in Fig. 5 eingezeichnet ist. Zur Zeit t=0 beträgt die wahre Entfernung $R_{true} = 5$km. Die Kurve $R_{est}$ in Fig. 5 gibt den Mittelwert der jeweils in dieser Zeit erfolgten Entfernungsschätzungen an. Die gestrichelten Kurven $R_{est}+\sigma_R$ und $R_{est}-\sigma_R$ oberhalb und unterhalb des Verlaufs von $R_{est}$ geben die Standardabweichungen der Entfernungsschätzungen der verschiedenen Monte-Carlo-Läufe an. Nach 0,8 Minuten wird pro Monte-Carlo-Lauf der erste Entfernungswert geschätzt, so dass dann auch der erste Mittelwert der geschätzten Entfernung $R_{est}$ zur Verfügung steht. Mit zunehmender Zeit nähert sich die Kurve für $R_{est}$ mit immer kleiner werdender Streuung der Kurve für die wahre Entfernung $R_{true}$ an.

In einer Regressionsschaltung 32 werden Entfernungsdifferenzen $\Delta R_i$ der geschätzten Entfernungen $R_{est}$ zu einer durch die geschätzten Entfernungen $R_{est}$ gelegten Geraden ermittelt, in einem Mittelwertbildner 33 gemittelt und mit einem in einem Geber 34 vorgebbaren Grenzwert Am verglichen. Der Ausgang des Mittelwertbildners 33 ist ebenfalls mit einem Eingang der Logikschaltung 40 verbunden. Wenn die Entfernungsdifferenzen kleiner als der Grenzwert Am sind, wird die Logikschaltung 40 angesteuert.

Wahlweise über einen Schalter 35 werden Entfernungs- Standardabweichungen $\sigma_R$ der Entfernungsschätzung in einer Rechnerschaltung 36 bestimmt und mit einem Stabilitätsmaß $S_R$ aus einer Vorgabeschaltung 37 verglichen, die ebenfalls mit einem Eingang der Logikschaltung 40 verbunden ist. Wenn die Entfernungs-Standardabweichung $\sigma_R$ kleiner oder gleich dem Stabilitätsmaß $S_R$ ist, wird die Logikschaltung 40 angesteuert. Für das in Fig. 3 gezeigte Szenarium ist das Stabilitätsmaß $S_R$ nach 9 Minuten erreicht, die geschätzte Entfernung $R_{est}$ beträgt dann 2km (siehe Fig. 5).

Für eine zusätzliche Warnanzeige ist die Logikschaltung 40 ausgangsseitig mit einer weiteren Vergleichsstufe 41 verbunden, die eingansseitig mit der Entfernungsvergleichsstufe 31 verbunden ist. Sobald die Logikschaltung 40 am Ausgang ein Signal zur Anzeige des Zieldatensatzes an die Lagedarstellung 21 abgibt, wird die Vergleichsstufe 41 aktiviert. Die geschätzte Entfernung $R_{est}$ wird mit einer in einem Geber 42 vorgebbaren Minimalentfernung $R_{min}$ verglichen. Falls die geschätzte Entfernung $R_{est}$ kleiner als die Minimalentfernung $R_{min}$ ist, wird durch das Ausgangssignal der Vergleichsstufe 41 die Warnanzeige auf der Lagedarstellung 21 aktiviert, da sich ein Ziel in einem Umkreis mit einem Radius, der kleiner als die Minimalentfernung $R_{min}$ ist, zum Eigenboot befindet und eine Gefahr für die Bootssicherheit bedeuten kann. Diese Situation ergibt sich gemäß Fig. 5 bei einer vorgegebenen Minimalentfernung $R_{min} = 2,0$ km nach 10,8 Minuten, als sich das Ziel in einer geschätzten Entfernung von $R_{est} = 1,8$ km vom U-Boot befindet. Ab da ist die Entfernungsstandardabweichung $\sigma_R$ stets kleiner als das Stabilitätsmaß $S_R$.

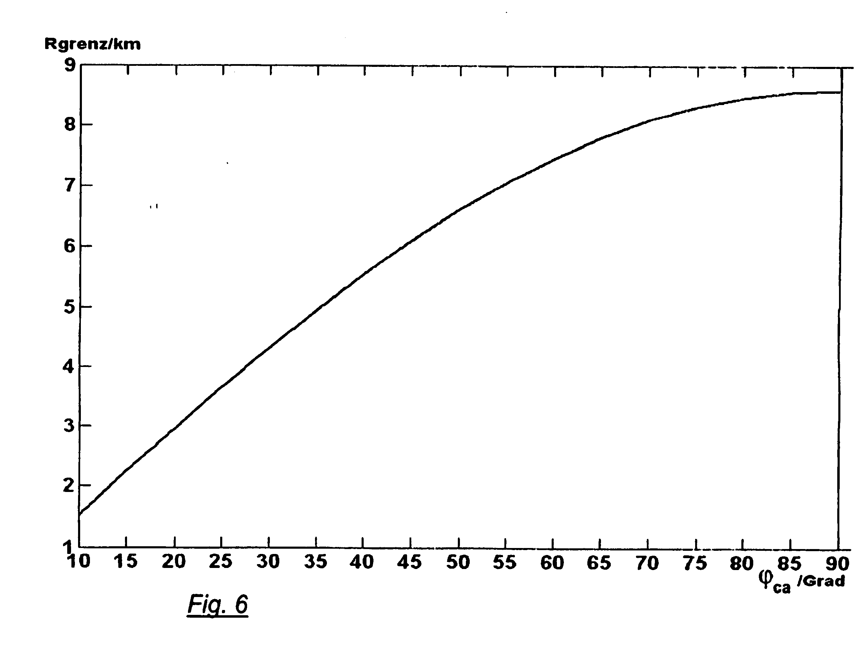

Fig. 6 zeigt den Zusammenhang zwischen dem schiffsbezogenen Peilwinkel $\varphi_{ca}$ und der Vergleichsentfernung $R_{Grenz}$ für einen Parallaxegrenzwert $P_{Grenz}$ von 0,2° und einen Abstand D = 30m zwischen den beiden Wandleranordnungen. In dem Szenarium gemäß Fig. 3 befindet sich das Ziel zu Beginn der Messfahrt in einer Entfernung von $R_0 = 5$km. In den ersten 6 Minuten ändert sich der schiffsbezogene Peilwinkel $\varphi_{ca}$ von 20° auf 0°, die Entfernung wird kleiner und die Vergleichsentfernung $R_{Grenz}$ geht in diesem Winkelbereich von 3km auf 0 km zurück. Danach steigt der schiffsbezogene Peilwinkel $\varphi_{ca}$ von 0° auf 90°, die Entfernung R zum Ziel Z wird wieder kleiner. Die Vergleichsentfernung $R_{Grenz}$ steigt für diese Peilwinkel auf Werte bis zu 8,5km.

Nach gut 8 Minuten beträgt der Peilwinkel $\varphi_{ca}$ = 17° (Fig. 3), der Parallaxewert P ist größer als der Parallaxegrenzwert $P_{Grenz}$ = 0,2° (Fig. 4), die geschätzte Entfernung $R_{est}$ zum Ziel Z ist gleich der Grenzentfernung $R_{Grenz}$ = 2,5km (Fig. 5) und die Stabilität der Entfernungsschätzung ist ausreichend (Fig. 5). Der Zieldatensatz wird auf der Lagedarstellung 21 zur Anzeige gebracht, obwohl das Eigenboot noch kein Eigenmanöver durchgeführt hat.

Ein besonderer Aspekt der vorliegenden Erfindung ist die automatische dynamische Anpassung der Anzahl der für die Schätzung der Zieldaten verwendeten gemessenen Peilwinkel. In jedem Verarbeitungszyklus wird ein Satz von Zieldaten geschätzt. Dabei wird je Verarbeitungszyklus eine vorbestimmte Anzahl von gemessenen Peilwinkeln verarbeitet. Das Schätzfilter 15 verwendet für die Schätzung eines Zieldatensatzes jeweils die gemessenen Peilwinkel und/oder Zieldaten aus vorherigen Verarbeitungszyklen, um einen neuen Zieldatensatz zu schätzen. Die Anzahl der verwendeten Verarbeitungszyklen wird vorliegend als Filterlänge bezeichnet. Diese Filterlänge wird für jedes Ziel automatisch und individuell bestimmt. Dabei wird die Filterlänge dynamisch, und zwar vorzugsweise einmal während jedes Verarbeitungszyklus, neu bestimmt und die auf diese Weise neu bestimmte Filterlänge vom Schätzfilter für das jeweilige Ziel verwendet.

Die Ermittlung einer in einem n-ten Verarbeitungszyklus bestimmten Filterlänge $FL_n$ wird nachfolgenden unter Bezugnahme auf Fig. 2, soweit nichts anderes angegeben ist, erläutert.

Die von der Zylinderbasis 11 bzw. allgemein einer ersten Anordnung von Wasserschallaufnehmern und dem zugeordneten Richtungsbilder 12 gemessenen Peilwinkel $\varphi_{ca}$ werden einem ersten Streuungsrechner 50 zugeführt. Entsprechend werden die von der Seitenantenne 13 bzw. allgemein einer zweiten Anordnung von Wasserschallaufnehmern und dem zugeordneten Richtungsbilder 14 gemessenen Peilwinkel $\varphi_{fa}$ einem zweiten Streuungsrechner 51 zugeführt.

Jeder dieser Streuungsrechner 50, 51 schätzt Standardabweichungen $\sigma_1$ bzw. $\sigma_2$ der jeweils gemessenen Peilwinkel. Die innerhalb jedes Verarbeitungszyklus gemessenen Peilwinkel einer Wasserschallaufnehmeranordnung werden zunächst zu einer Roh-Standardabweichung verrechnet. Dies geschieht für jede Anordnung von Wasserschallaufnehmern nebst zugeordnetem Richtungsbilder getrennt in dem jeweils zugeordneten Streuungsrechner. Die jeweils weiter verwendete Standardabweichung $\sigma_1$ bzw. $\sigma_2$ jedes Streuungsrechners 50, 51 ergibt sich aus einer Mittelwertbildung von einer Anzahl auf diese Weise ermittelter Roh-Standardabweichungen.

Die auf diese Weise ermittelten Standardabweichungen $\sigma_1$ und $\sigma_2$ werden sodann einem Koeffizientenmodul 52 zugeführt, welches Koeffizienten a, b und c bestimmt. Diese Koeffizienten werden vorzugsweise aus einer Tabelle ausgelesen, die für verschiedene $\sigma_1$/$\sigma_2$-Kombinationen Werte für die Koeffizienten a, b und c enthält. Diese Tabelle liegt vorteilhafterweise in einem Datenspeicher vor. Die Koeffizienten a, b und c können jedoch auch jeweils numerisch berechnet werden.

Anhand der Koeffizienten a, b und c ermittelt ein Filterlängenmodul 53 eine vorläufig bestimmte Filterlänge FLO in Abhängigkeit des aktuell geschätzten Parallaxewerts $P_n$. Dabei ist $P_n$ ein Mittelwert der zuletzt berechneten Differenzen vorgefiltert gemessener Peilwinkel. Auf diese Weise werden statistische Ausreißer unter den ermittelten Parallaxewerten beseitigt bzw. mit niedrigerem Gewicht berücksichtigt. Diese Abhängigkeit der Filterlänge FLO vom Parallaxewerts $P_n$ ergibt sich aus der Gleichung:

$$FL0 = Int\ [a + b\ /\ (P_n + c)]$$

wobei FLO die neu errechnete vorläufige Filterlänge, $P_n$ den aktuell geschätzten Parallaxewert sowie a, b und c die vorstehend genannten Koeffizienten bezeichnet und Int die Bildung einer ganzen Zahl bedeutet. Diese ganze Zahl wird insbesondere aus der nächst höheren oder der nächst niedrigeren ganzen Zahl ermittelt.

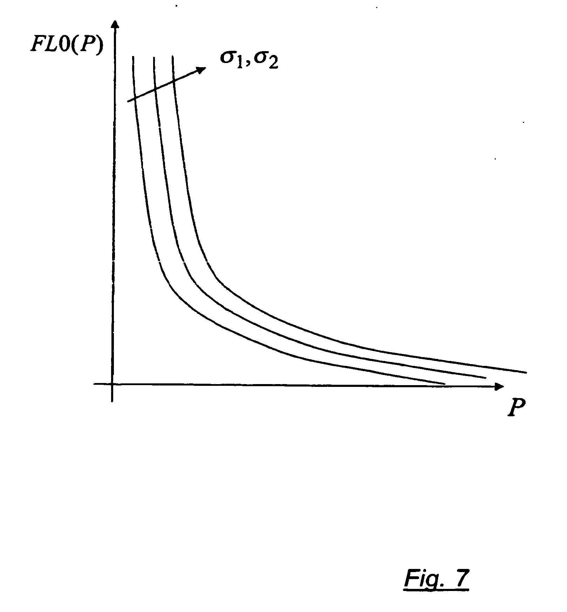

Fig. 7 veranschaulicht exemplarisch mit drei Kurven den Zusammenhang zwischen der vorläufigen Filterlänge FL0 in Abhängigkeit vom Parallaxewert P, für den der aktuell zum Zeitpunkt n geschätzten Parallaxewert $P_n$ herangezogen wird. Die einzelnen Kurven FL0 (P) ähneln einander. Mit zunehmenden Streuungswerten $\sigma_1$, $\sigma_2$ verschieben sich die Kurven jedoch zu größeren Filterlängen.

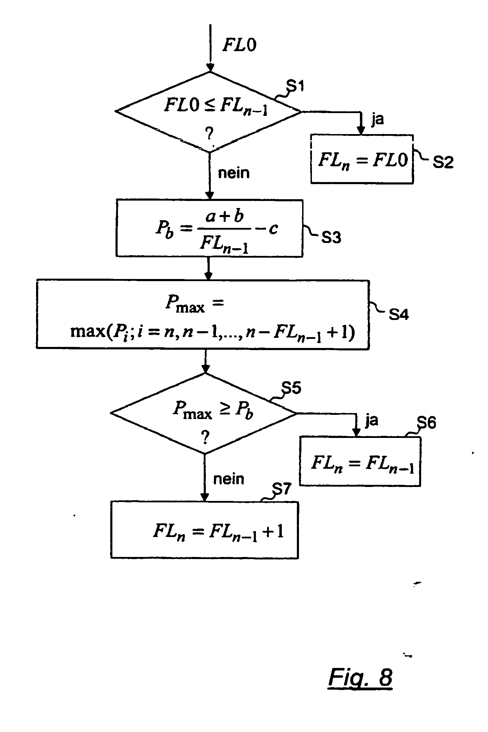

Das in Fig. 2 gezeigte Filterlängenmodul 53 erzeugt auf diese Weise in Abhängigkeit von der ihm zugeführten aktuell geschätzten Parallaxe $P_n$ eine vorläufige neue Filterlänge FL0, die einem Filterlängenrechner 54 zugeführt wird. Dieser Filterlängenrechner 54 führt die nachfolgend im Zusammenhang mit Fig. 8 erläuterten Schritte aus.

Der Filterlängenrechner 54 vergleicht im Schritt S1 die vorläufige Filterlänge FLO mit der im vorherigen Verarbeitungszyklus bestimmten Filterlänge $FL_{n-1}$. Ist die vorläufige Filterlänge FLO kleiner oder gleich der Filterlänge $FL_{n-1}$ des vorherigen Verarbeitungszyklus, so wird im Schritt S2 die für den aktuellen Verarbeitungszyklus n neu zu bestimmende Filterlänge $FL_n$ gleich der vorläufigen Filterlänge FLO gewählt. Da die neue Filterlänge $FL_n$ vorteilhafterweise so klein wie möglich gewählt werden soll, um auch in der Nähe des Eigenboots manövrierende Ziele zuverlässig verfolgen zu können, kann die neue Filterlänge $FL_n$ auch um mehr als 1 kleiner sein als die Filterlänge $FL_{n-1}$ des vorherigen Verarbeitungszyklus.

Wenn jedoch im Schritt S1 festgestellt wird, dass die vorläufige Filterlänge FLO nicht kleiner oder gleich der Filterlänge $FL_{n-1}$ des vorherigen Verarbeitungszyklus ist, wird im Schritt S3 ein benötigter Parallaxewert $P_b$ errechnet, der sich aus der Umkehrfunktion von FL = f(P) ergibt. Diese Umkehrfunktion lautet:

$$P_b = (a + b)\ /\ FL_{n-1} - c$$

Im Schritt S4 wird der größte Parallaxewert $P_{max}$ im Filterfenster bestimmt, d.h. der größte Parallaxewert aus der Menge des im Verarbeitungszyklus n geschätzten Parallaxewertes $P_n$ sowie der in den $FL_{n-1}$ vorherigen Verarbeitungszyklen geschätzten Parallaxewerte, wobei $FL_{n-1}$ die im vorherigen Verarbeitungszyklus n - 1 bestimmte Filterlänge ist.

Im Schritt S5 wird geprüft, ob $P_{max}$ größer oder gleich der benötigten Parallaxe $P_b$ ist. Sofern dies der Fall ist, wird im Schritt S6 die Filterlänge $FL_n$ für den aktuellen Verarbeitungszyklus n gleich der Filterlänge $FL_{n-1}$ des vorherigen Verarbeitungszyklus gesetzt.

Sofern jedoch $P_{max}$ nicht größer oder gleich der benötigten Parallaxe $P_b$ ist, wird im Schritt S7 die Filterlänge $FL_n$ des aktuellen Verarbeitungszyklus n aus der um 1 erhöhten Filterlänge $FL_{n-1}$ des vorherigen Verarbeitungszyklus n-1 bestimmt.

Auf diese Weise wird sichergestellt, dass die jeweils neu berechnete Filterlänge $FL_n$ höchstens um 1 größer ist als die vorherigen Filterlänge $FL_{n-1}$. Dies ist ausreichend, da solche Daten, die im vorherigen Verarbeitungszyklus für ein zufriedenstellendes Ergebnis der geschätzten Zieldaten nicht nötig waren, auch nicht im aktuellen Verarbeitungszyklus benötigt werden.

Durch das Bestimmen der Filterlänge $FL_n$ anhand der größten Parallaxe $P_{max}$ im Filterfenster erreicht man, dass die Filterlänge schnell abnimmt, solange die geschätzte Parallaxe zunimmt, bspw. weil sich das Ziel nähert oder es sich in einen günstigeren Empfangssektor bewegt. Ferner erreicht man, dass die Filterlänge des vorherigen Verarbeitungszyklus oft noch weiter beibehalten werden kann, auch wenn die Parallaxe schon wieder abnimmt, z.B. weil sich das Ziel wieder entfernt oder in einen ungünstigeren Empfangssektor hineinläuft, und daher die Filterlänge eigentlich wieder erhöht werden müsste.

Die gemäß Fig. 8 bestimmte neue Filterlänge $FL_n$ wird gemäß Fig. 2 vom Filterlängenrechner 54 dem Schätzfilter 15 zugeführt, welches unter Berücksichtigung der innerhalb des Filterfensters mit der Filterlänge $FL_n$ einen neuen Satz von Zieldaten gemäß obigen Erläuterungen generiert.

Die Filterlänge des Schätzfilters wird für jedes Ziel individuell immer wieder dynamisch adjustiert. Sie wird dabei so kurz wie möglich gewählt. Eine kurze Filterlänge ist insbesondere vorteilhaft, um im nahen Umfeld des Eigenboots manövrierende Ziele verfolgen zu können. Sobald nämlich ein Ziel seinen Kurs oder seine Geschwindigkeit ändert, insbesondere in der näheren Umgebung des Trägerfahrzeugs Manöver durchführt, verschlechtern länger zurückliegende Peilwinkel die Schätzergebnisse, da diese einem anderen Leg, d.h. einer anderen gleichförmigen Bewegungsbahn mit konstantem Kurs und konstanter Geschwindigkeit, zuzuordnen sind. Es ist daher vorteilhaft, wenn in derartigen Fällen das Schätzfilter 15 mit einer kurzen Filterlänge betrieben wird. Derartige störende Abweichungen von einer gleichförmigen Bewegungsbahn sind besonders signifikant im Nahbereich des Eigenbootes zu erwarten, insbesondere bei größeren Parallaxen. Daher ist es günstig, bei steigender Parallaxe die Filterlänge zu verkürzen. Insgesamt ist durch eine Verkürzung der Filterlänge eine Positionsschätzung manövrierender Ziele bzw. schnell anlaufender Ziele mit zufriedenstellenden Ergebnissen möglich.

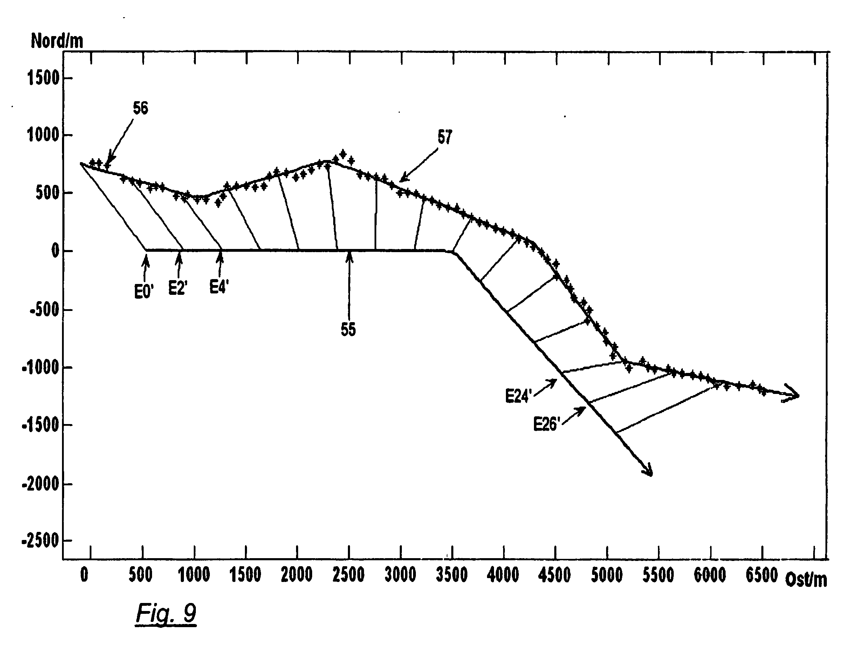

Fig. 9 zeigt ein weiteres Szenarium einer als Eigenbahn 55 bezeichneten Bewegungsbahn eines Trägerfahrzeuges, welches sich von einer Startposition E0' über Positionen E2', E4', etc. zunächst entlang einer ersten gradlinigen Bahn und nach Durchführung eines Manövers entlang einer zweiten gradlinigen Bahn bewegt. Der zeitliche Abstand zwischen zwei benachbarten Positionen, z.B. zwischen E0' und E2', beträgt jeweils zwei Minuten. Das Trägerfahrzeug bewegt sich daher mit konstanter Geschwindigkeit entlang der Eigenbahn 55. Nach 16 Minuten vollführt es einen Kurswechsel in Richtung Steuerbord.

Auf der Backbordseite des Trägerfahrzeuges bewegt sich ein Ziel entlang einer Zielbahn 56. An den Positionen E0', E1', E2', E4' etc. sind jeweils vereinfacht Peilstrahlen angegeben, wie sie zur wahren Zielbahn 56 verlaufen müssten. Das Ziel vollführt mehrere Manöver, nämlich ein erstes nach etwa 4,5 Minuten, ein zweites nach etwa 10 Minuten, ein drittes nach etwa 18,5 Minuten sowie ein weiteres Manöver nach etwa 24 Minuten. Die mit Kreuzen symbolisierten Positionen sind die vom Trägerfahrzeug geschätzten Zielpositionen 57. Man erkennt, dass die geschätzten Zielpositionen 57 von den entsprechenden Positionen der wahren Zielbahn 56 mehr oder weniger abweichen. Je länger das Ziel sich auf einer gleichförmigen Bahn bewegt, desto besser entsprechen die geschätzten Zielpositionen 57 der wahren Zielbahn 56.

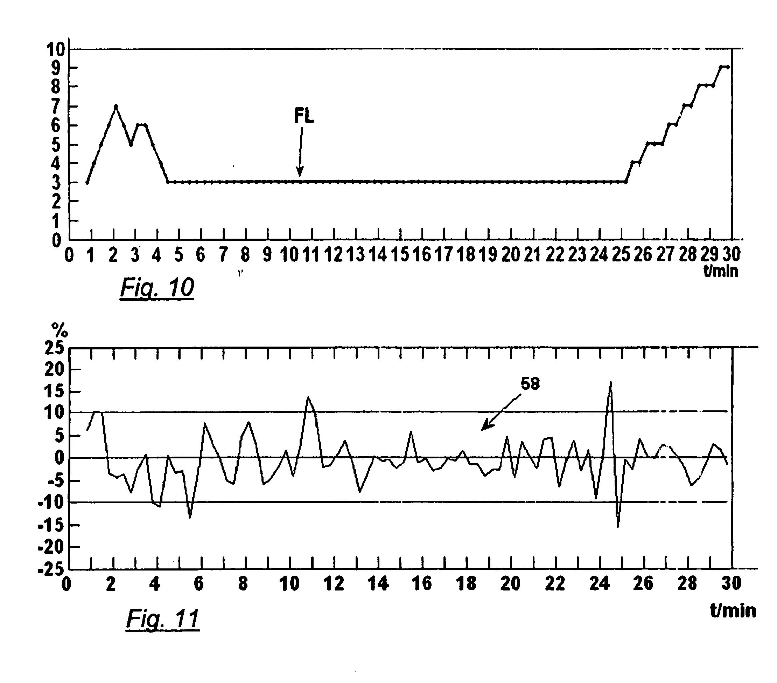

Fig. 10 zeigt den zeitlichen Verlauf der jeweils dynamisch während jedes Verarbeitungszyklus neu bestimmten und verwendeten Filterlänge FL. Die Filterlänge beträgt zunächst drei, d.h. das Filterfenster erstreckt sich über drei Verarbeitungszyklen. Sie wächst dann an auf einen Wert von sieben, so dass sich das Filterfenster dann über sieben Verarbeitungszyklen erstreckt. Da sich das Ziel jedoch innerhalb der ersten 4,5 Minuten dem Trägerfahrzeug nähert, wächst die Parallaxe an und die Filterlänge wird wieder bis auf den Wert "drei" verkürzt. Nach etwa 25,5 Minuten entfernt sich das Ziel wieder, so dass sich die Parallaxe verringert und daher die Filterlänge wieder erhöht wird.

Fig. 11 veranschaulicht den Fehler, der sich bei der Schätzung der Entfernung ergibt. Man erkennt, dass sich immer dann ein besonders großer Schätzfehler 58 ergibt, wenn das Ziel ein Manöver durchgeführt hat. Dies gilt insbesondere, solange sich der Zeitpunkt der Durchführung des Zielmanövers innerhalb der Filterlänge, d.h. des Filterfensters befindet. Da nach etwas 4,5 Minuten ein Zielmanöver durchgeführt worden ist, welches die folgenden Schätzungen negativ beeinflusst, ergibt sich ein weiterer besonders großer Schätzfehler 58 nach etwa 5,5 Minuten. In entsprechender Weise ergibt sich ein besonders großer Schätzfehler 11 Minuten nach dem Start der Aufzeichnung, da das Ziel nach 10 Minuten ein Zielmanöver durchgeführt hat. Ein weiterer besonders großer Schätzfehler ergibt sich etwa 24,5 bis 25 Minuten nach Beginn der Aufzeichnung, da das Ziel nach 24 Minuten ein weiteres Zielmanöver durchgeführt hat.

In einem alternativen Ausführungsbeispiel werden für unterschiedliche Zieldaten unterschiedliche Filterlängen für dasselbe Ziel verwendet. Bspw. wird die auf die vorstehend beschriebene Weise bestimmte Filterlänge verwendet, um eine Zielentfernung zu schätzen, während eine weitere Filterlänge für die Schätzung des Kurses und/oder der Geschwindigkeit dieses Ziels bestimmt wird. Diese weitere Filterlänge wird dabei vorzugsweise größer als die Filterlänge für die Entfernungsschätzung gewählt. Die Lagedarstellung 21 zeigt dem Bediener dann die geschätzte Entfernung auf der Grundlage der ersten, wie oben ausführlich beschrieben, ermittelten Filterlänge und den Kurs und die Geschwindigkeit des Ziels auf der Grundlage der weiteren Filterlänge an.

Vorteilhafterweise werden zwei in einem großen Abstand beabstandete Wasserschallaufnehmernanordnungen, z.B. die Seitenantenne und die Schleppantenne, verwendet, um Ziele in einem großen Abstand zu verfolgen. Für Ziele in einem kürzeren Abstand, insbesondere unterhalb eines vorbestimmten Schwellenwertes, werden zwei in einem kürzeren Abstand beabstandete Wasserschallaufnehmernanordnungen, z.B. die Seitenantenne und die Zylinderbasis, verwendet.

Je näher sich ein Ziel dem Eigenboot nähert, desto genauer, schneller und empfangssektorunabhängig können seine Zieldaten bestimmt werden. Die vorliegende Erfindung eignet sich daher besonders auch als Anti-Kollisionswarneinrichtung. D.h. bei Unterschreiten eines Sicherheitsabstandes wird eine Kollisionswarnmeldung ausgeben. Diese Kollisionswarnmeldung wird einem Bediener und/oder einer Einrichtung zur Einleitung von Kollisionsvermeidungsmaßnahmen zugeführt, welche in Erwiderung auf eine derartige Kollisionswarnmeldung selbständig eine entsprechende Kollisionsvermeidungsmaßnahme, z.B. einen Tauchvorgang oder eine Kursänderung einleitet.

Das erfindungsgemäße Verfahren kann auch speziell vor Auftauchvorgängen eingesetzt werden. Falls sich aus der Zieldatenschätzung ergibt, dass sich das Ziel in einem ungünstigen Empfangssektor befindet und daher ein Risiko besteht, dass das Ziel den Auftauchvorgang gefährdet, wird der Eigenkurs derart verändert, dass dieses Ziel querab zur Längsachse des Eigenbootes liegt. Aufgrund der kurzen Filterlänge bei Zielen im Nahbereich des Eigenbootes kann in ausreichend kurzer Zeit eine Zieldatenschätzung, insbesondere Zielpositionsschätzung, betreffend ein derartiges Ziel mit einer ausreichenden Genauigkeit durchgeführt werden, um eine Kollisionsgefahr zu bewerten.

Die beschriebene Zieldatenschätzung, welche eine Kreuzpeilung mittels zweier Anordnungen von Wasserschallaufnehmern vorsieht, setzt kein Eigenmanöver voraus. Daher kann eine derartige Zieldatenschätzung auch mittels stillstehender Wasserschallaufnehmernanordnungen erfolgen. Somit können auch festinstallierte Wasserschallaufnehmernanordnungen verwendet werden, die außerhalb eines Schiffes oder U-Boots, beispielsweise an Unterwasserbauten zum Schutz von Hafenanlagen, Ölplattformen und Seestraßen montiert sind. Die Erfindung ist daher nicht auf die Anwendung an Bord von Schiffen bzw. U-Booten beschränkt.

Die erfindungsgemäße Zieldatenschätzung mit variabler Filterlänge setzt jedoch nicht notwendigerweise eine Kreuzpeilung mittels der beschriebenen Wasserschallaufnehmer voraus. Es sind vielmehr auch Zieldatenschätzungen mit anderen bzw. weiteren Sensoren möglich.

Bei der Kreuzpeilung wird die Filterlänge unter anderem mittels der Parallaxe bestimmt. Es sind aber auch andere Kriterien denkbar, die man zur Filterlängenbestimmung heranziehen kann. Bspw. lässt sich die Sensorreichweite als Kriterium verwenden; beträgt bspw. die Sensorreichweite 20 km, so kann man die Filterlänge auf eine einer halben Stunde entsprechende Anzahl von Verarbeitungszyklen begrenzen. Beträgt hingegen die Sensorreichweite 100 km, so ist die Filterlänge auf bspw. eine einer Stunde entsprechende Anzahl von Verarbeitungszyklen zu vergrößern. Als alternatives oder weiteres Kriterium können auch geografische Randbedingungen herangezogen werden. Befindet sich bspw. in einem Abstand von 20 km Land, so muss das Ziel näher als 20 km zum Eigenboot liegt. In diesem Fall kann die Filterlänge kleiner als eine 30 Minuten entsprechende Anzahl von Verarbeitungszyklen gewählt werden. Sofern die Zieldatenschätzung ohne Kreuzpeilung nur mit einfachen Peilungen erfolgt, ist ein Eigenmanöver zur Zieldatenschätzung erforderlich. In diesem Fall muss die Filterlänge immer so groß gewählt werden, dass innerhalb des Filterfensters ein Eigenmanöver liegt.

**Patentansprüche**

1.  Verfahren zum passiven Bestimmen von Zieldaten ($R_{est}$, $v_{est}$, $\gamma_{est}$) durch richtungsselektiven Empfang von Schallwellen, die von einem Ziel (Z) abgestrahlt oder gesendet werden, mit einer Anordnung von Wasserschaltaufnehmem (11; 13) einer Sonar-Empfangsanlage, insbesondere auf einem Trägerfahrzeug (10) aus gemessenen Peilwinkeln ($\varphi_{ca}$, $\varphi_{fa}$) zu einem oder mehreren Zielen (Z), wobei in aufeinanderfolgenden Verarbeitungszyklen aus gemessenen Peilwinkeln ($\varphi_{ca}$, $\varphi_{fa}$) je Verarbeitungszyklus wenigstens ein Zieldatum ($R_{est}$; $v_{est}$; $\gamma_{est}$) geschätzt wird, wobei in die Schätzung jedes Zieldatums gemessene Peilwinkel ($\varphi_{ca}$, $\varphi_{fa}$) aus einer als Filterlänge ($FL_n$) bezeichneten Anzahl vorangegangener Verarbeitungszyklen einfließen,

**dadurch gekennzeichnet, dass**
die Filterlänge ($FL_n$) individuell pro Ziel (Z) automatisch und dynamisch in Abhängigkeit von einer geschätzten Entfernung zum Ziel (Z) bestimmt und bei einem sich annähernden Ziel (Z) verkleinert bzw. bei einem sich entfernenden Ziel (Z) vergrößert und entsprechend der somit bestimmten Filterlänge ($FL_n$) eingestellt wird.

2. Verfahren nach Anspruch 1,
   **dadurch gekennzeichnet, dass**
   Peilwinkel ($\varphi_{ca}$, $\varphi_{fa}$) mit zwei voneinander beabstandeten Anordnungen von Wasserschallaufnehmern (11, 13) gemessen werden, aus den gemessenen Peilwinkeln ($\varphi_{ca}$, $\varphi_{fa}$) mittels Differenzbildung ein Parallaxewert ($P_n$) bestimmt, die Filterlänge ($FL_n$) in Abhängigkeit von diesem Parallaxewert ($P_n$) bestimmt und bei Zunahme des Parallaxewerts ($P_n$) die Filterlänge ($FL_n$) verkleinert bzw. bei Abnahme des Parallaxewerts ($P_n$) die Filterlänge ($FL_n$) vergrößert wird.

3. Verfahren nach Anspruch 2,
   **dadurch gekennzeichnet, dass**
   bezüglich der von der ersten Anordnung von Wasserschallaufnehmern (13) und bezüglich der von der zweiten Anordnung von Wasserschallaufnehmern (11) gemessenen Peilwinkel ($\varphi_{ca}$ $\varphi_{fa}$) jeweils ein Wert für eine Streuung ($\sigma_1$ $\sigma_2$) ermittelt und die Filterlänge ($FL_n$) in Abhängigkeit von den ermittelten Streuungswerten ($\sigma_1$, $\sigma_2$) bestimmt wird und bei Abnahme der Streuungswerte ($\sigma_1$, $\sigma_2$) die Filterlänge ($FL_n$) verkleinert bzw. bei Zunahme der Streuungswerte ($\sigma_1$, $\sigma_2$) die Filterlänge ($FL_n$) vergrößert wird.

4. Verfahren nach Anspruch 3,
   **dadurch gekennzeichnet, dass**
   für die Ermittlung eines aktuellen Streuungswerts ($\sigma_1$, $\sigma_2$) eine Anzahl von gemessenen Peilwinkeln ($\varphi_{ca}$, $\varphi_{fa}$) herangezogen wird und mehrere derartig ermittelte Streuungswerte ($\sigma_1$, $\sigma_2$) gemittelt werden.

5. Verfahren nach einem der Ansprüche 2 bis 4,
   **dadurch gekennzeichnet, dass**
   ein aktueller Parallaxewert ($P_n$) aus einer Mittelwertbildung einer Anzahl vorhergehend bestimmter Parallaxewerte ($P_{n-1}$, $P_{n-2}$, $P_{n-3}$, ---) und ggf. eines aktuell gemessenen Parallaxewertes errechnet wird.

6. Verfahren nach Anspruch 5,
   **dadurch gekennzeichnet, dass**
   die vorhergehenden Parallaxewerte ($P_{n-1}$, $P_{n-2}$, $P_{n-3}$, ...) jeweils mittels Differenzwertbildung vorgefilterter gemessener Peilwinkel ($\varphi_{ca}$, $\varphi_{fa}$) jeweils beider Wasserschallaufnehmeranordnungen (11, 13) bestimmt werden.

7. Verfahren nach einem der vorhergehenden Ansprüche,

che,
**dadurch gekennzeichnet, dass**
die Filterlänge ($FL_n$) für einen aktuellen Verarbeitungszyklus (n) gleich einer neu errechneten Filterlänge (FL0) gewählt wird, falls diese neue Filterlänge (FL0) nicht größer ist als die im vorhergehenden Verarbeitungszyklus bestimmte Filterlänge ($FL_{n-1}$).

8. Verfahren nach Anspruch 7 mit Rückbezug auf einen der Ansprüche 2 bis 6,
   **dadurch gekennzeichnet, dass**
   eine neue Filterlänge (FL0) als ganze Zahl aus dem aktuellen Parallaxewert ($P_n$) sowie den ermittelten Streuungswerten ($\sigma_1$, $\sigma_2$) errechnet wird.

9. Verfahren nach einem der vorhergehenden Ansprüche,
   **dadurch gekennzeichnet, dass**
   die Filterlänge ($FL_n$) für einen aktuellen Verarbeitungszyklus (n) um maximal 1 größer als die im vorhergehenden Verarbeitungszyklus (n-1) bestimmte Filterlänge ($FL_{n-1}$) gewählt wird, falls eine neu errechnete Filterlänge (FL0) größer ist als die im vorhergehenden Verarbeitungszyklus (n - 1) bestimmte Filterlänge ($FL_{n-1}$).

10. Verfahren nach Anspruch 9,
    **dadurch gekennzeichnet, dass**
    die Filterlänge ($FL_n$) für den aktuellen Verarbeitungszyklus (n) gleich der Filterlänge ($FL_{n-1}$) des vorhergehenden Verarbeitungszyklus (n-1) gewählt wird, falls der größte geschätzte, in den innerhalb dieser Filterlänge ($FL_{n-1}$) liegenden vorangegangenen Verarbeitungszyklen (n-1) liegende Parallaxewert ($P_{max}$) größer ist als ein für die im vorhergehenden Verarbeitungszyklus (n-1) gewählte Filterlänge ($FL_{n-1}$) benötigter Parallaxewert ($P_b$)

11. Verfahren nach Anspruch 10,
    **dadurch gekennzeichnet, dass**
    der benötigte Parallaxewert ($P_b$) aus den ermittelten Streuungswerten und der Filterlänge ($FL_{n-1}$) des vorhergehenden Verarbeitungszyklus (n-1) bestimmt wird.

12. Verfahren nach einem der vorhergehenden Ansprüche,
    **dadurch gekennzeichnet, dass**
    mit der dynamisch bestimmten Filterlänge ($FL_n$) die Entfernung ($R_{est}$) zu einem Ziel (Z) geschätzt wird und dass wenigstens eine weitere Filterlänge für die Schätzung von Kurs, ($\gamma_{est}$) und/oder Geschwindigkeit ($v_{est}$) dieses Ziels (Z) bestimmt und diese weitere Filterlänge wenigstens so groß wie die Filterlänge ($FL_n$) für die Entfernungsschätzung gewählt wird.

13. Verfahren nach einem der vorhergehenden Ansprüche,

**dadurch gekennzeichnet, dass**
die Filterlänge bei einer auf ein Eigenmanöver des Trägerfahrzeugs (10) zurückgehenden Parallaxewertänderung nicht geändert wird.

14. Verfahren nach einem der vorhergehen Ansprüche, **dadurch gekennzeichnet, dass**
eine geschätzte Zielentfernung ($R_{est}$) mit einer vorgebbaren Minimalentfernung ($R_{min}$) verglichen wird und bei Unterschreiten der Minimalentfernung ($R_{min}$) eine Warnung wegen Gefährdung der Sicherheit des Trägerfahrzeugs angezeigt wird.

15. Vorrichtung zur passiven Bestimmung von Zieldaten ($R_{est}$, $v_{est}$, $\gamma_{est}$) durch richtungsselektiven Empfang von von einem Ziel (Z) abgestrahlten oder gesendeten Schallwellen mittels einer Anordnung von Wasserschallaufnehmern (11; 13) einer Sonar-Empfangsanlage, insbesondere auf einem Trägerfahrzeug (10), wobei in einem Schätzfilter (15) aus gemessenen Peilwinkeln ($\varphi_{ca}$, $\varphi_{fa}$) zu einem oder mehreren Zielen (Z) in aufeinanderfolgenden Verarbeitungszyklen je Verarbeitungszyklus wenigstens ein Zieldatum ($R_{est}$; $v_{est}$; $\gamma_{est}$) schätzbar ist, wobei in die Schätzung jedes Zieldatums ($R_{est}$; $v_{est}$; $\gamma_{est}$) gemessene Peilwinkel ($\varphi_{ca}$, $\varphi_{fa}$) aus einer als Filterlänge ($FL_n$) bezeichneten Anzahl vorangegangener Verarbeitungszyklen einflieβen,
**gekennzeichnet durch**

a) ein Filterlängenmodul (53), das derart ausgebildet ist, um die Filterlänge ($FL_n$) individuell pro Ziel (Z) automatisch und dynamisch in Abhängigkeit von einer geschätzten Entfernung zum Ziel (Z) zu bestimmen und
b) einen Filterlängenrechner (54), der derart ausgebildet ist, um die Filterlänge ($FL_n$) bei einem sich annähernden Ziel (Z) zu verkleinern bzw. bei einem sich entfernenden Ziel (Z) zu vergrößern und entsprechend dieser Filterlänge ($FL_n$) im Schätzfilter (15) die Filterlänge ($FL_n$) einzustellen.

**Claims**

1. Method for passive determination of target data ($R_{est}$, $v_{est}$, $\gamma_{est}$) by directionally selective reception of sound waves which are emitted or transmitted from a target (Z), having an arrangement of waterborne sound sensors (11; 13) in a sonar receiving installation, in particular on a carrier vehicle (10), from measured bearing angles ($\varphi_{ca}$, $\varphi_{fa}$) to one or more targets (Z), with at least one target data item ($R_{est}$; $v_{est}$; $\gamma_{est}$) being estimated in each processing cycle from measured bearing angles ($\varphi_{ca}$, $\varphi_{fa}$) in successive processing cycles, with measured bearing angles ($\varphi_{ca}$, $\varphi_{fa}$) from a number of previous processing cycles, referred to as the filter length ($FL_n$), being included in the estimation of each target data item, **characterized in that**
the filter length ($FL_n$) is determined automatically and dynamically, individually for each target (Z) as a function of the estimated range to the target (Z) and is decreased for an approaching target (Z), and is increased for a target (Z) moving away, and is adjusted in accordance with the filter length ($FL_n$) determined in this way.

2. Method according to Claim 1, **characterized in that**
bearing angles ($\varphi_{ca}$, $\varphi_{fa}$) are measured using two arrangements of waterborne sound sensors (11, 13) at a distance from one another, a parallax value ($P_n$) is determined by subtraction from the measured bearing angles ($\varphi_{ca}$, $\varphi_{fa}$), the filter length ($FL_n$) is determined as a function of this parallax value ($P_n$), the filter length ($FL_n$) is decreased when the parallax value ($P_n$) is increasing, and the filter length ($FL_n$) is increased when the parallax value ($P_n$) is decreasing.

3. Method according to Claim 2, **characterized in that**
one value for a scatter ($\sigma_1$, $\sigma_2$) is determined in each case for the bearing angles ($\varphi_{ca}$, $\varphi_{fa}$) measured by the first arrangement of waterborne sound sensors (13) and for the bearing angles ($\varphi_{ca}$, $\varphi_{fa}$) measured by the second arrangement of waterborne sound sensors (11), the filter length ($FL_n$) is determined as a function of the determined scatter values ($\sigma_1$, $\sigma_2$), the filter length ($FL_n$) is decreased when the scatter values ($\sigma_1$, $\sigma_2$) are decreasing, and the filter length ($FL_n$) is increased when the scatter values ($\sigma_1$, $\sigma_2$) are increasing.

4. Method according to Claim 3, **characterized in that**
a number of measured bearing angles ($\varphi_{ca}$, $\varphi_{fa}$) are used to determine a current scatter value ($\sigma_1$, $\sigma_2$), and a plurality of scatter values ($\sigma_1$, $\sigma_2$) determined in this way are averaged.

5. Method according to one of Claims 2 to 4, **characterized in that**
a current parallax value ($P_n$) is calculated by averaging a number of previously determined parallax values ($P_{n-1}$, $P_{n-2}$, $P_{n-3}$, ...) and possibly a currently measured parallax value.

6. Method according to Claim 5, **characterized in that**
the previous parallax values ($P_{n-1}$, $P_{n-2}$, $P_{n-3}$, ...) are each determined by subtraction of prefiltered measured bearing angles ($\varphi_{ca}$, $\varphi_{fa}$) from both waterborne sound sensor arrangements (11, 13) in each case.

7. Method according to one of the preceding claims, **characterized in that** the filter length ($FL_n$) for a current processing cycle (n) is chosen to be equal to a newly calculated filter length (FL0), provided that this new filter length (FL0) is no greater than the filter length ($FL_{n-1}$) determined in the previous processing cycle.

8. Method according to Claim 7, referring back to one of Claims 2 to 6, **characterized in that** a new filter length (FL0) is calculated as an integer from the current parallax value ($P_n$) and the determined scatter values ($\sigma_1$, $\sigma_2$).

9. Method according to one of the preceding claims, **characterized in that** the filter length ($FL_n$) for a current processing cycle (n) is chosen to be at most 1 greater than the filter length ($FL_{n-1}$) determined in the previous processing cycle (n-1), if a newly calculated filter length (FL0) is greater than the filter length ($FL_{n-1}$) determined in the previous processing cycle (n-1).

10. Method according to Claim 9, **characterized in that** the filter length ($FL_n$) for the current processing cycle (n) is chosen to be equal to the filter length ($FL_{n-1}$) of the previous processing cycle (n-1) if the greatest estimated parallax value ($P_{max}$) in the previous processing cycles (n-1) within this filter length ($FL_{n-1}$) is greater than a parallax value ($P_b$) required for the filter length ($FL_{n-1}$) chosen in the previous processing cycle (n-1).

11. Method according to Claim 10, **characterized in that** the required parallax value ($P_b$) is determined from the determined scatter values and the filter length ($FL_{n-1}$) of the previous processing cycle (n-1).

12. Method according to one of the preceding claims, **characterized in that** the dynamically determined filter length ($FL_n$) is used to estimate the range ($R_{est}$) to a target (Z) and **in that** at least one further filter length is determined for estimation of the course ($\gamma_{est}$) and/or velocity ($v_{est}$) of this target (Z), and this further filter length is chosen to be at least as great as the filter length ($FL_n$) for range estimation.

13. Method according to one of the preceding claims, **characterized in that** the filter length is not changed if the parallax value changes as a result of a manoeuvre by the carrier vehicle (10) itself.

14. Method according to one of the preceding claims,

**characterized in that** the estimated target range ($R_{est}$) is compared with a predeterminable minimum range ($R_{min}$), and a warning resulting from a hazard to the safety of the carrier vehicle is indicated if the minimum range ($R_{min}$) is undershot.

15. Apparatus for passive determination of target data ($R_{est}$, $v_{est}$, $\gamma_{est}$) by directionally selective reception of sound waves which are emitted or transmitted from a target (Z) by means of an arrangement of waterborne sound sensors (11; 13) in a sonar receiving installation, in particular on a carrier vehicle (10), in which case at least one target data item ($R_{est}$; $v_{est}$; $\gamma_{est}$) can be estimated in an estimation filter (15) in each processing cycle from measured bearing angles ($\varphi_{ca}$, $\varphi_{fa}$) to one or more targets (Z) in successive processing cycles, with measured bearing angles ($\varphi_{ca}$, $\varphi_{fa}$) from a number of previous processing cycles, referred to as the filter length ($FL_n$), being included in the estimation of each target data item ($R_{est}$; $v_{est}$; $\gamma_{est}$), **characterized by**

 a) a filter length module (53), being designed in order to determine the filter length ($FL_n$) automatically and dynamically, individually for each target (Z) as a function of an estimated range to the target (Z) and
 b) a filter length computer (54), being designed in order to decrease the filter length ($FL_n$) for an approaching target (Z) respectively to increase the filter length ($FL_n$) for a departing target (Z) and to adjust according to this filter length ($FL_n$) the filter length ($FL_n$) in the estimation filter (15).

**Revendications**

1. Procédé de détermination passive de données d'une cible ($R_{est}$, $v_{est}$, $\gamma_{est}$) par réception à sélection directionnelle d'ondes sonores, qui sont rayonnées ou émises par une cible (Z), avec un arrangement d'enregistreurs acoustiques sous-marins (11, 13) d'un équipement de réception de sonar, notamment sur un véhicule porteur (10), à partir des angles de relèvement mesurés ($\varphi_{ca}$, $\varphi_{fa}$) par rapport à une ou plusieurs cibles (Z), au moins une donnée de référence de cible ($R_{est}$, $v_{est}$, $\gamma_{est}$) étant estimée par cycle de traitement dans des cycles de traitement successifs à partir des angles de relèvement mesurés ($\varphi_{ca}$, $\varphi_{fa}$), les angles de relèvement mesurés ($\varphi_{ca}$, $\varphi_{fa}$) d'un nombre donné de cycles de traitement précédents, appelé longueur de filtre ($FL_n$), intervenant dans l'estimation de chaque donnée de référence de cible, **caractérisé en ce que** la longueur de filtre ($FL_n$) est déterminée individuelle-

ment par cible (Z) automatiquement et de manière dynamique en fonction d'un éloignement estimé de la cible (Z) et elle est réduite en présence d'une cible (Z) qui se rapproche ou augmentée en présence d'une cible (Z) qui s'éloigne et réglée conformément à la longueur de filtre ($FL_n$) ainsi déterminée.

2. Procédé selon la revendication 1,
**caractérisé en ce que**
les angles de relèvement ($\varphi_{ca}$, $\varphi_{fa}$) sont mesurés avec deux arrangements espacés l'un de l'autre d'enregistreurs acoustiques sous-marins (11, 13), une valeur de parallaxe ($P_n$) est déterminé à partir des angles de relèvement mesurés ($\varphi_{ca}$, $\varphi_{fa}$) par calcul de la différence, la longueur de filtre ($FL_n$) est déterminée en fonction de cette valeur de parallaxe ($P_n$) et la longueur de filtre ($FL_n$) est réduite lorsque la valeur de parallaxe ($P_n$) augmente et la longueur de filtre ($FL_n$) est accrue lorsque la valeur de parallaxe ($P_n$) diminue.

3. Procédé selon la revendication 2,
**caractérisé en ce que**
une valeur de dispersion ($\sigma_1$, $\sigma_2$) est à chaque fois déterminée concernant les angles de relèvement ($\varphi_{ca}$, $\varphi_{fa}$) mesurés par le premier arrangement d'enregistreurs acoustiques sous-marins (13) et concernant les angles de relèvement mesurés par le deuxième arrangement d'enregistreurs acoustiques sous-marins (11) et la longueur de filtre ($FL_n$) est déterminée en fonction des valeurs de dispersion ($\sigma_1$, $\sigma_2$) déterminées et la longueur de filtre ($FL_n$) est réduite lorsque les valeurs de dispersion ($\sigma_1$, $\sigma_2$) diminuent et la longueur de filtre ($FL_n$) est accrue lorsque les valeurs de dispersion ($\sigma_1$, $\sigma_2$) augmentent.

4. Procédé selon la revendication 3,
**caractérisé en ce que**
un certain nombre d'angles de relèvement mesurés ($\varphi_{ca}$, $\varphi_{fa}$) est utilisé pour la détermination d'une valeur de dispersion ($\sigma_1$, $\sigma_2$) actuelle et la moyenne de plusieurs valeurs de dispersion ($\sigma_1$, $\sigma_2$) ainsi déterminées est calculée.

5. Procédé selon l'une des revendications 2 à 4,
**caractérisé en ce que**
une valeur de parallaxe ($P_n$) actuelle est calculée à partir d'un calcul de la valeur moyenne d'un nombre de valeurs de parallaxe déterminées précédemment ($P_{n-1}$, $P_{n-2}$, $P_{n-3}$, ...) et une valeur de parallaxe mesurée actuelle est éventuellement calculée.

6. Procédé selon la revendication 5,
**caractérisé en ce que**
les valeurs de parallaxe précédentes ($P_{n-1}$, $P_{n-2}$, $P_{n-3}$, ...) sont à chaque fois déterminées par calcul de la valeur différentielle des angles de relèvement mesurés ($\varphi_{ca}$, $\varphi_{fa}$) préfiltrés à chaque fois des deux arrangements d'enregistreurs acoustiques sous-marins (11, 13).

7. Procédé selon l'une des revendications précédentes,
**caractérisé en ce que**
la longueur de filtre ($FL_n$) est choisie égale à une longueur de filtre nouvellement calculée (FL0) pour un cycle de traitement courant (n) si cette nouvelle longueur de filtre (FL0) n'est pas supérieure à la longueur de filtre ($FL_{n-1}$) déterminée dans le cycle de traitement précédent.

8. Procédé selon la revendication 7, avec référence à l'une des revendications 2 à 6,
**caractérisé en ce que**
une nouvelle longueur de filtre (FL0) est calculée sous la forme d'un nombre entier à partir de la valeur de parallaxe ($P_n$) actuelle ainsi que des valeurs de dispersion ($\sigma_1$, $\sigma_2$) déterminées.

9. Procédé selon l'une des revendications précédentes,
**caractérisé en ce que**
la longueur de filtre ($FL_n$) pour un cycle de traitement courant (n) est choisie au maximum supérieure de 1 à la longueur de filtre ($FL_{n-1}$) déterminée dans le cycle de traitement précédent (n-1) si une longueur de filtre nouvellement calculée (FL0) est supérieure à la longueur de filtre ($FL_{n-1}$) déterminée dans le cycle de traitement précédent (n-1).

10. Procédé selon la revendication 9,
**caractérisé en ce que**
la longueur de filtre ($FL_n$) pour le cycle de traitement courant (n) est choisie égale à la longueur de filtre ($FL_{n-1}$) du cycle de traitement précédent (n-1) si la plus grande valeur de parallaxe estimée ($P_{max}$) qui se trouve dans les cycles de traitement précédents (n-1) qui se trouvent au sein de cette longueur de filtre ($FL_{n-1}$) est supérieure à une valeur de parallaxe (Pb) nécessaire pour la longueur de filtre ($FL_{n-1}$) choisie dans le cycle de traitement précédent (n-1).

11. Procédé selon la revendication 10,
**caractérisé en ce que**
la valeur de parallaxe (Pb) nécessaire est déterminée à partir des valeurs de dispersion déterminées et de la longueur de filtre ($FL_{n-1}$) du cycle de traitement précédent (n-1).

12. Procédé selon l'une des revendications précédentes,
**caractérisé en ce que**
la distance ($R_{est}$) par rapport à une cible (Z) est estimée avec la longueur de filtre ($FL_n$) déterminée de manière dynamique et qu'au moins une longueur de filtre supplémentaire est déterminée pour l'estima-

tion de la trajectoire ($\gamma_{est}$) et/ou de la vitesse ($v_{est}$) de cette cible (Z) et cette longueur de filtre supplémentaire est choisie au moins aussi grande que la longueur de filtre ($FL_n$) pour l'estimation de la distance.

13. Procédé selon l'une des revendications précédentes,
    **caractérisé en ce que**
    la longueur de filtre n'est pas modifiée en cas de modification de la valeur de parallaxe résultant d'une manoeuvre propre du véhicule porteur (10).

14. Procédé selon l'une des revendications précédentes,
    **caractérisé en ce que**
    une distance estimée de la cible ($R_{est}$) est comparée avec une distance minimale ($R_{min}$) pouvant être prédéfinie et, si elle est inférieure à la distance minimale ($R_{min}$), une alerte est émise en raison du risque pour la sécurité du véhicule porteur.

15. Dispositif de détermination passive de données d'une cible ($R_{est}$, $v_{est}$, $\gamma_{est}$) par réception à sélection directionnelle d'ondes sonores, qui sont rayonnées ou émises par une cible (Z), au moyen d'un arrangement d'enregistreurs acoustiques sous-marins (11, 13) d'un équipement de réception de sonar, notamment sur un véhicule porteur (10), au moins une donnée de référence de cible ($R_{est}$, $v_{est}$, $\gamma_{est}$) pouvant être estimée par cycle de traitement dans un filtre d'estimation (15) à partir des angles de relèvement mesurés ($\varphi_{ca}$, $\varphi_{fa}$) par rapport à une ou plusieurs cibles (Z) dans des cycles de traitement successifs, les angles de relèvement mesurés ($\varphi_{ca}$, $\varphi_{fa}$) d'un nombre donné de cycles de traitement précédents, appelé longueur de filtre ($FL_n$), intervenant dans l'estimation de chaque donnée de référence de cible ($R_{est}$, $v_{est}$, $\gamma_{est}$),
    **caractérisé par**

    a) un module de longueur de filtre (53) qui est configuré pour déterminer la longueur de filtre ($FL_n$) individuellement par cible (Z) automatiquement et de manière dynamique en fonction d'un éloignement estimé par rapport à la cible (Z) et
    b) un calculateur de longueur de filtre (54) qui est configuré pour réduire la longueur de filtre ($FL_n$) en présence d'une cible (Z) qui se rapproche ou pour augmenter la longueur de filtre ($FL_n$) en présence d'une cible (Z) qui s'éloigne et pour régler la longueur de filtre ($FL_n$) dans le filtre d'estimation (15) conformément à cette longueur de filtre ($FL_n$).

*Fig. 1*

_Fig. 2_

*Fig. 3*

*Fig. 4*

*Fig. 5*

*Fig. 6*

*Fig. 7*

$$FL0$$

$$FL0 \leq FL_{n-1}\ ?$$  S1

ja

$$FL_n = FL0$$  S2

nein

$$P_b = \frac{a+b}{FL_{n-1}} - c$$  S3

$$P_{max} = \max(P_i; i = n, n-1, ..., n-FL_{n-1} + 1)$$  S4

$$P_{max} \geq P_b\ ?$$  S5

ja

$$FL_n = FL_{n-1}$$  S6

nein

$$FL_n = FL_{n-1} + 1$$  S7

_Fig. 8_

*Fig. 9*

*Fig. 10*

*Fig. 11*

EP 2 026 087 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1410060 B1
- DE 3446658 C2
- DE 10352738 A1
- DE PS3446658 C